# EUROPEAN PATENT SPECIFICATION

(11) **EP 4 427 185 B1**
(45) Date of publication and mention of the grant of the patent: **06.05.2026**
(21) Application number: 22812628.0
(22) Date of filing: 03.11.2022
(51) Int. Cl.: G06Q 40/08

(54) **AUTOMATED OPTICAL-BASED SYSTEM PROVIDING DYNAMIC PARAMETRIC FLOOD IMPACT COVER AND METHOD THEREOF**
AUTOMATISIERTES OPTISCHES SYSTEM MIT DYNAMISCHER PARAMETRISCHER HOCHWASSERAUFPRALLABDECKUNG UND VERFAHREN DAFÜR
SYSTÈME OPTIQUE AUTOMATISÉ FOURNISSANT UNE PROTECTION D'IMPACT D'INONDATION PARAMÉTRIQUE DYNAMIQUE ET SON PROCÉDÉ

(30) Priority: 03.11.2021 CH 0705002021
(43) Date of publication of application: 11.09.2024
(73) Proprietor: Swiss Reinsurance Company Ltd., 8022 Zürich (CH)
(72) Inventor: SUNDERMANN, Lukas, 8037 Zürich (CH)
(74) Representative: Leimgruber, Fabian Alfred Rupert
(86) International application number: PCT/EP2022/080742
(87) International publication number: WO 2023/079038

(56) References cited:
- WO-A1-2006/002566
- US-A1- 2018 075 537
- US-A1- 2018 165 616
- JIANG XIN ET AL: "Rapid and large-scale mapping of flood inundation via integrating spaceborne synthetic aperture radar imagery with unsupervised deep learning", ISPRS JOURNAL OF PHOTOGRAMMETRY AND REMOTE SENSING, AMSTERDAM [U.A.] : ELSEVIER, AMSTERDAM, NL, vol. 178, 9 June 2021 (2021-06-09), pages 36 - 50, XP086710755, ISSN: 0924-2716, [retrieved on 20210609], DOI: 10.1016/J.ISPRSJPRS.2021.05.019

## Description

### Field of the invention

The field of the invention is directed towards automated systems providing parametric flood event impact cover to one or more objects based on forward-looking measurements of occurrences and occurrence rates of measurable physical impacts of catastrophic events, in particular measurably impacting flood events. The measurements related to measurands depending on the physical, location-dependent event strength, location (as geographic area-based, cell-based, event strength line based, or geographic or topographic coordinate based (as latitude and longitude)), and measured time window, in particular to measurable impacts associated with the occurrence of flood events. Further, the invention is directed to automated parametric mitigation or transfer of the measured forward-looking impact to a specific object by an automated risk-transfer or risk-absorption system, where the impact e.g. is measured in units of expected damage rate, percentage or other quantifying and/or measuring units associated with the measured forward-looking impact the specific object. This invention further relates to automated methods and systems for automated location-dependent recognition of flood occurrence probabilities (denoted as flood hazards), where flood states are automatically measured or captured, and location-dependent forward-looking probability values are automatically determined, measured or generated based on the direct measuring link to the physical environment and/or measuring-based stochastically modeling. Finally, the invention relates to digital, modular platforms for automated mitigation of impacted physical damages to physical objects on a certain geographic location and future time window.

### Background of the invention

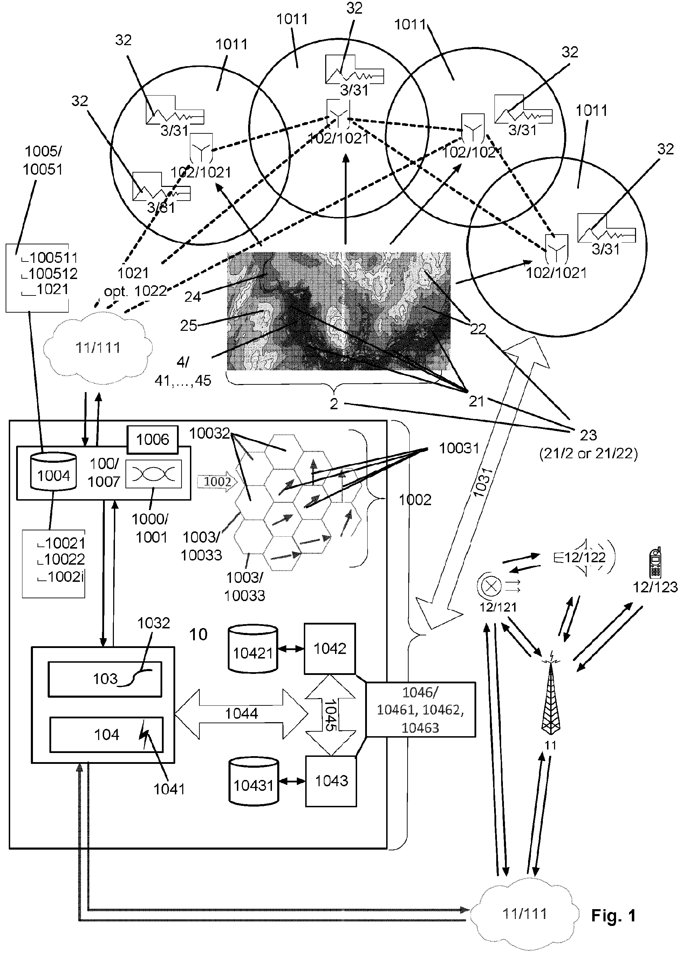

Among the most impacting, damaging, and destructive natural or geophysical disaster of the world, floods are most frequent and uncertain type. Floods endangers lives, properties, infrastructures and damage a lot of livelihoods within a short period of time. Figure 1 showing the physical impact of floods measured by monetary losses incurred in different countries. Controlling floods are difficult, but minimizing the impact by technical approaches is necessary. It is difficult to identify which measure is the better strategy and policy to deal with the floods. The combination of the human vulnerability and the physical exposures result in flood hazards. These losses and hazards can be minimized by making aware the public beforehand by providing them the reliable and suitable measuring data about flood risks, i.e. about the measurable probability value of having a certain impact strength to an object by an occurring flood event with a certain strength. Reliable prediction by technical forecast systems relying on measuring parameter values, preparedness, prevention, diminishing, and damage assessment are the stages of flood disaster management. Flood inundation maps are an important technical tool for providing the data in an accessible way. They reflect for different flood event types, the topographic forecasted pattern of a particular site, the sum of people and physical objects at risk, population anticipation and coping with the disaster and flood protection works. These are a crucial technical requirement for automated flood risk mitigation and risk-transfer rate pricing, municipal planning, ecological studies and set up of emergency action plans. Advancements in Remote Sensing (RS), technical modelling and forecasting and Geographic Information Systems (GIS) turned out to be important and particularly technically useful in flood inundation mapping. Floods can be predicted and flood risk areas can be identified via modelling with appropriately selected sensory input like hydrologic engineering centers-river analysis system (HEC-RAS) and hydrologic engineering centers-hydrologic modelling system (HEC-HMS) clubbing with GIS and Remote Sensing(RS). For example, for one-dimensional and unsteady-flow simulations of the designed floods, HEC-RAS and GIS can be used. Flood maps be generated for different return periods and these maps can be mapped to provide a comparison with other maps, e.g. using gradient or deviation measurements. This can be required for the technical prediction of floods.

Not all flood events have the same impact, wherein the impact may vary in strength as well as in type. In urban contexts, for example, flooding can e.g. pose a significant hazard to moving vehicles and causes traffic disruption by placing water flow in the transportation network, resulting in vehicles being swept away, injuries, and the loss of life of passengers. The remote detection of urban flooding over a large area will allow cities to develop flood maps to reduce risk during weather events. Mapping urban flood events is a challenge for three main reasons: the urban environment is highly complex with waterways and drains at submeter resolutions, the flooding will be shallow and ephemeral, and ponding means that the flooding extent will be discontinuous. Hydrologic models that are the conventional approach in flood forecasting struggle with these factors, making the application of these techniques difficult. Attempts have been made in the prior art to map urban flooding and flood risk with traditional prior art methods. However, high resolution hydrologic modelling structures may be effective at small scales (e.g., a few urban blocks) but the computational resources and highly accurate inputs required to properly model urban flooding at the community scale are not widely available with the current technology. These limiting factors exemplify the need to find technically based methods of mapping or predicting flooding that are less computationally intensive. The advantage of remote sensing is flood detection for large scale flood mapping without the need for highly accurate inputs and computationally intense processes to advance flood risk management.

While extreme flooding, especially that which falls in the 100-year event category, is quite understood, and mapped by a plurality of prior art systems, minor flooding is difficult to map and predict. This less severe flooding, known as nuisance flooding or NF, poses less of a hazard to lives and property, but can still be inconvenient or even dangerous, especially to drivers. Though drier regions such as Southern California may not experience the same extreme, spatially extensive flooding common in other mor humid parts, NF remains a problem during the rainy season, especially for aging infrastructure or current systems that are not designed to handle changing climactic patterns. NF is expected to become more of a problem in the future as the climate changes and sea levels rise. Coastal areas such as Southern California are particularly vulnerable to NF. There is a need to develop new reliable techniques to detect catastrophic flooding, also covering urban flooding, which may be also used for nuisance flooding, reducing the risks associated with flooding during heavy rainfall in various context, covering urban and rural environments.

In the technical field of remote sensing, systems have been developed in flood detection using optical methods such as aerial photographs or satellite imagery, such as SAR and LiDAR (Light Detection and Ranging) systems. SAR, or Synthetic Aperture Radar, is an especially promising technique. As an active sensor, the radar can detect the Earth's surface no matter what time of day it is or what cloud conditions prevail. Some prior art systems for the detection of flooding with SAR try to combine SAR imagery measurements from COSMO-SkyMed (Agency Spaziale Italiana, Rome, Italy) and Landsat 8 OLI data (Ball Aerospace and technologies, Boulder, CO, USA) to measure map flooding along rivers. Others rely on measured RADARSAT-2 SAR images and flood stage data based on the return period for the 2011 Richelieu River flood in Canada, and even others rely on using TerraSAR-X in tandem with very high-resolution aerial imagery to measure map floodings. Until now, SAR data was considered insufficient for mapping flooding in more complex topographies and zones as urban zones due to the low resolution and shadow and layover in the complex urban environment.

The technical need for reliable and fast measuring and/or forecasting systems is also reflected by the painfully lacking reliable automated flood impact and impact response or mitigation systems. For many countries, it is hardly possible to do a technically correct flood impact occurrence rating and/or determination based on predictive forward-looking impact measures. A glance at the loss history shows that physical damages and associated losses caused by flood events are equally high or higher than those of other natural catastrophic events as earthquakes, windstorms, or other perils. For many of those other perils various prediction and/or rating and/or early warning systems based on actual measuring parameter values already exist. Large physical part of industrial facilities, industrial power and time are lost by occurring flood events having a physical impact to such objects. Additionally, with the trend of increasing risk-transfer penetration for floods, the insurance and re-insurance industry is affected ever more by flood caused physical damages and losses. To extend the early warning and flood damage rating to detailed and even facultative business, however, the threat of immense data amounts has to be coped with. This is done by completely new simulation approaches simulating allowing to extrapolate actual physical measuring parameters to future, i.e. forward-looking time windows and geographic cells.

Further, in many countries, a large number of industrial facilities and homes have a significant and measurably predictable probability (risk) for being impacted by flood events, and reasonably should be covered by flood mitigation and risk-transfer processes. However, many prior art systems do not capable to reliable hedge against the peril of flood events, inter alia, due to the prevalence of moral hazard and adverse selection phenomena, for example, in entering risk-transfers for objects most affected by the specific peril of flood. In such cases, traditional risk-transfer is not available. Whereas for other damage risks, risk-transfer systems can be based on the use of the law of large numbers to precisely determine a relatively small premium amount to large numbers of objects in order to cover the occurring damages of the small numbers of impacted objects who have suffered a loss due to the event-based impact to their objects. In flood event covers, typically the numbers of impacted objects is larger than the available number of individuals interested in protecting their property/objects from the peril using risk covers, which means that most prior art insurance systems do not provide risk-transfers to occurring flood events since the probability of operating the system in a sound profit range are regarded as being remote. Additionally, while there are risk-transfer systems that are enabled to provide primary flood risk covers for high value homes, the underwriting and provision of such mitigation processes does not account for many flood risks.

The lack of flood reliably automatable risk mitigation, risk-transfer and risk covering systems can be detrimental to the operation of many industrial facilities at a certain location or detrimental to local homeowners of the geographic cell concerned. Even, in many cases, the responsible may discover only after an occurring event impacting a damage that their standard damage covers, and risk-transfers do not cover damages caused by flooding. It is to be mentioned that flooding can occur due to or in the wake of various physical natural disasters, for example occurring earthquakes, landslides, tsunamis, volcanic eruptions, or other natural disasters. Furthermore, few risk-transfer systems provide flood damage coverage due to the hazard of flood typically being confined to a few areas. As a result, it is an unacceptable risk due to the inability to spread the risk to a wide enough group of objects in order to technically absorb the potential catastrophic nature of the hazard.

In summary, natural disasters such as floods cause severe damage in various parts of the world. The occurrence of most of such disaster events is difficult, if not impossible, to predict over the long term by prior art measuring systems. Conventional flood mitigation techniques determine, assess and estimate pricing of flood risks using parametric risk-transfer structures so as to mitigate flood risks by gathering information related to base flood elevation data, flood depth by using mitigation devices and survey information. In addition, digital marketplace techniques list online policies that guarantee a pre-agreed payout based on pre-determined parameters in case of a flood hazard. The digital marketplace techniques determine a water-elevation function factoring in high water probability data, leading to saving both risk-transfer providers' and customers' time and cost spent on building, inspection, and damage estimation. Additional mechanisms for assessing flood risks use measured flood levels through detection chambers that assess floods based on a determined flood level measured by air-based pressure measuring devices and/or remote sensing techniques, as e.g. satellite based determination of floods. Further, the measured flood levels are used to automate signaling and triggering of cover for a physical impact, typically measured as loss or damage at the impacted object, for example by a flood damage cover payout.

Other available risk transfer mechanisms capture event data of occurred flood and maps data to a digital map along with data related to risk transfer of portfolio. The portfolio is mapped by geographic area and value so that an exposure and risk to the portfolio induced by a flood event is determined. Yet another mechanism for assessing flood risks by simulating movement of water in case of floods is to determine potential for water damage to surface of a structure. This mechanism provides automated expert advices relating to whether to apply flood risk-transfer/insurance for risk-exposed structure based on simulation of water movement in relation to the structure.

Parametric insurance/cover is a type of risk-transfer that is provided to the individual based on one or more pre-agreed measure (the measuring or triggering "parameter" or "index"). The parametric risk cover is levelled by an adjustable degree or threshold value of a predicted risk measure based on, for example, geographic location, exposure threshold etc. Such values can e.g. be generated using prior art hazard mapping applications such as CatNet. The exemplary, proprietary hazard mapping application CatNet is a global, web-based natural hazard analysis and mapping software-based engine, which enables the user to assess and visualize natural hazard exposure for a certain location in the world. Such prior art data-processing engines, as data-link to the application, typically comprise Application Programming Interface (API) providing access to the proprietary risk modeling structures (as e.g. Cat Server API) or any probabilistic flood modeling techniques.

Based on the degree of risk accessed, a parametric expertise may be determined to tailor a product design. This may involve introducing index definition including double trigger functionalities, quoting, and pricing, combining parametric and indemnity risk-transfer. Further, parametric transfer structures may be determined using natural catastrophe (NatCat) pricing tool for parametric damage and damage exposure cover. In addition, based on the inventive parametric structure, a modular computersupported platform can be provided that provides an end-to-end solution from automated front-end and underwriting to automated natural catastrophe impact covering, e.g. by automated electronic monetary transfer. The platform may be used as front-end for users, for event tracking, for automated activation or electronic triggering of electronic alarm devices e.g. based on forecasted event progressing, measured and/or forecasted event impact and/or physical damage parameters, maintaining proof of loss, generating automatic claims payment, and sustaining policy administration. The prior art document Jiang Xi et al: "Rapid and large-scale mapping of flood inundation via integrating spaceborne synthetic aperture radar imagery with unsupervised deep learning", ISPRS Journal of Photogrammetry and Remote Sensing, Amsterdam, NL, vol. 178, June 2021, pp. 36-50 discloses a so called synthetic aperture radar (SAR) for timely monitoring of flood information as it penetrates the clouds during flood events. SAR satellites with high spatial and temporal resolution is used as a basis for assessing flood risks. To extract flood inundation using SAR a segmentation algorithm is used for automatic flood mapping in near-real-time over vast areas and for all-weather conditions by integrating Sentinel-1 SAR imagery with an unsupervised machine learning approach named Felz-CNN. The algorithm consists of three phases: (i) pixel generation; (ii) convolutional neural network-based featurization; (iii) pixel aggregation. The algorithm allows to identify flood extent with an accuracy of 93% and 94%, respectively. The results are then used for the unsupervised approach for an application of flood mapping.

The above-disclosed mechanisms/techniques do not discuss about providing a modular system that determines, assesses, and evaluates price risks that arise due to occurrence of floods. In addition, these mechanisms/techniques fail to provide parametric risk transfer structures that facilitate to mitigate the risks associated with occurrence of the floods. There is therefore a need in the art for an improved, automatable system and method for providing a customizable impact cover structure for a flood area risk based on measurable and reliable prediction and assessment of location- and time-window-dependent physical impact damage during the occurrence of flood events.

### Summary of the Invention

It is one object of the present invention to provide an automated system and method for reliable forward-looking measurements and ratings of physical impacts of occurring location-dependent catastrophic events, as flood events, to a specific object, and in automated conduct and provision/generation of appropriate covers and/or hedging against the impacted damage to the specific object. It is further an object of this invention to provide a new and better automated system and method for providing a dynamic parametric cover, which does not have the above-mentioned disadvantages of the prior art. In particular, it is an object of the present invention to provide a risk-transfer cover based on an extend of a flooded area. Further it is an object, to generate a pricing measure for a cover based on the chosen limit value (payout cover) and a measured and/or forecasted exposure value (e.g. related to the amount severity and/or extend of flooding to an area). The extent of flooded area is generated by assessing an Area of Interest (AOI) using automated systems such as Synthetic Aperture Radar or Drones and by dividing the area into grid cells. The AOI can e.g. be defined client- or user-specific. Ideally the grid cells cover the entire AOI. Later, with using technology such as SAR, it can e.g. be determined how much of the AOI is flooded (in percent area or number of grid cells).

The spacing between the messed network points, and thus the size of the grid cells can e.g. be predefined and can be different for different risk-transfer structures and user to be covered. The grid size can, thus, be predefined or automatically negotiated between a user and the inventive system, or it can by automatically and/or dynamically adjusted by the system based on a desired resolution within a selected area. The resolution can also be varied by the system e.g. in dependence to the severity of the impact in a certain area, e.g. the severity of flooding. The resolution can also be increased automatically and/or dynamically at the border of the affected area to achieve a more precise quantitative measure for the actual affected or impacted area.

In particular, these aims are achieved by the invention in which by means of an optical-based measuring and/or forecasting system and method for measuring a quantitative flooding extent measure value and/or a flooding impact extent measure value for physical objects located within a topographic and/or geographic area impacted by an occurrence of a flood event, comprising (i) measuring by means of satellite-based and/or airplane-based aerial remote sensing devices of the optical-based measuring and/or forecasting system, optical imaging sensory data and transmitting said optical imaging sensory data via a data transmission link to a central ground station, (ii) capturing a geographic and/or topographic area to be covered by a predefined data structure of a flood map generator, the data structure at least comprising definable area parameters capturing geographic location and/or geographic extent of said geographic and/or topographic area, and generating a flood map by the flood map generator based on the transmitted optical imaging sensory data using the predefined data structure, (iii) generating equally spaced network points over said geographic and/or topographic area providing a meshed network of network points having a definable mesh size and covering the whole geographic and/or topographic area, (iv) aggregating, after an occurrence of a flood event, for an affected area of said geographic and/or topographic area the total number of network points within the affected area, (v) measuring, after the occurrence of the flood event, the affected area of said geographic and/or topographic area based on measuring a flooding at each network point of the meshed network within the affected area based on the flood map, wherein network points measured as flooded are contributing to the measured affected area while network points measured as not flooded are not contributing to the measured affected area, and (vii) measuring the flooding extent measure value and/or flooding impact extent measure value of the affected area based on the network points measured as flooded to the total number of network points of the affected area.

In an embodiment variant, the method further comprises (i) providing a dynamic parametric flood impact cover for an object physically impacted by the occurrence of the flood event by using an adaptive risk-transfer structure based on the flooding extent measure value and/or the flooding impact extent measure value, (ii) generating the parametric coverage covering a possible loss associated with the occurrence of the flood event and impacting the geographic area measured by the affected area, as per the adjustable risk-transfer structure a threshold measure and is triggered by a threshold-trigger, wherein the threshold-trigger is selected from a percentage of the affected area given by the measured affected area to the geographic area; and (iii) transferring, by an electronic payment transfer module, based on the generated parametric coverage monetary pay-out parameter values by electronic payment transfer to the individual.

The network points can e.g. be measured as flooded when each network point of a specified area is flooded. The network points can e.g. be regularly spaced within the mesh network with a pre-definable spacing. The network points can further e.g. be essentially 0.005 x 0.005 deg mesh network points. Flood determination per grid cell can e.g. be binary at the centroid. However, it can also be determined dependent on the flood depth, i.e. more refined.

In another embodiment of the invention, the mesh network points are measured as flooded when each network point of the measured affected area is flooded. The network points can be defined as corner points of two dimensional m x n blocks. The m x n blocks are of approx. 8.72*10-5 radian. The network points measured as flooded can e.g. be determined using at least a neural network approach, and the affected area is measured using on-air imaging devices.

The grid cells measured as flooded can e.g. be determined using an artificial intelligence-based or machine-learning based engine, such as a neural network data processing structure, and the affected area can e.g. be measured using on-air imaging devices. The variant with the proposed grid-cell-based floodplain mapping is an inventive remote sensing intensive process that can e.g. be implemented all over the defined area. It can e.g. comprise a Digital Elevation Modelling (DEM) structure, with the predefined or adaptive measuring accuracy based on the selected grid size. The DEM structures allow the inventive system to derive the slope and terrain characteristics of the selected area. Is there a river, and if so is there a flat expanse of plain around that river? What might be below sea level that is near the mouth of a delta? To get the highest accuracy possible for these DEMs, the inventive system can e.g. use remote sensing. In particular measuring devices for aerial or space-based photography and/or LiDAR devices and Synthetic Aperture Radar (SAR) devices to produce the required high-accuracy DEMs. Aerial imagery can be used with multiple images to generate a DEM being captured using e.g. a plane or UAS. However, the quality of aerial imagery can e.g. be affected by lighting conditions and clouds. LiDAR, which shoots pulses of light and records their response, is an active system. That means it is less affected by lighting conditions, but can measure through light haze and clouds. Also SAR is able to measure through clouds at any time day or night, but is one of the most complicated remote sensing systems to be integrated. With the inventive DEMs, which can also be improved by other imagery sources such as satellite, or UAS imagery, features of importance can be monitored and/or detected in relation to how they relate to possible floodplains. Using remote sensing, the present system allows to classify land cover into many different areas of interest, such as low-lying plains, forests, sandy deltas, and urban areas, and then use those classifications to feed into the floodplain modeling structure. With LiDAR, the system can e.g. also automatically identify buildings and detect where they lie within the possible floodplains, i.e. assign floodplain-related measuring parameter values. These multiple inputs create a map that shows areas where flooding is measured with a higher probability value. The automated mapping can also be used for predictive modelling, cover or flood impact mitigation, and flood preparation or automated alarm signaling for activation of automated alarm systems.

As an embodiment variant, the system is automated to electronically disperse payments or transfer monetary parameter values to achieve the desired automatic cover covering the physical damage or impact caused by the natural event, e.g. the flooding event. The payments are dispersed via an electronic payment transfer module based on the generated parametric coverage monetary pay-out parameter. In particular, it is an object of the present invention to provide an automated method and system for providing dynamic parametric cover to an individual in case of an occurrence of a flood event by using an adaptive risk-transfer structure based on physical flood event measurements.

In another embodiment of the invention, wherein a premium vale is automatically generated based on the selected payout coverage and the forecasted exposure measure, i.e. the forecasted probability measurand for a future time window based on the measured occurrence frequencies and strength. Each risk-transfer can be parameterized as an exchange of risk to cover an actual physical impact to an object for a typically monetary transfer. Each impact by a risk event can be realized by a claim equivalent value, which represents the variable cost factors of a risk-transfer system. It is to be noted that the variable cost factor is difficult to determine compared to variable cost factors in other fields. For example, in the case of a production line, the variable costs, such as raw materials, are quite certain, which makes it easier to minimize it. In technical field of risk-transfer, on the other hand, variable cost factors are often measured to be a probabilistic distribution. Therefore, it is technically challenging to minimize it. In the present invention, AI/ML data processing structures are used to process the flood measuring data. In a simplified embodiment variant, also linear regression and/or generalized linear model (GLM) could be used for processing the measuring data and forecast the appropriate prediction parameter value for the future exposure measurands. However, the inventive Al-based underwriting measures risk measurands (i.e. the forecasted exposure probability values) with a much higher precision. In addition, the measuring data of the inventive system are rich compared to prior art system, as it is linked to and comprises a plurality of loT-measuring devices. Therefore, the inventive system is able to assess the forecasted risk measurands more precisely. Uncertainty of variable cost values diminishes for the inventive system adopting the proposed technologies. Thus, the system makes it easy to determine and optimize automatically and self-sufficiently pricing values for the risk-transfer based on the measured flood parameter values. Further, the geographic area is of unvarying landscape representative of area covered by dry land and wetland.

Further, the occurrence of the flood event can e.g. be detected using loopback signaling. The herein proposed technical loopback mechanism is especially shaped for the flood detection providing an inventive loopback flood detection method and system. A source maintenance end point at the flood area sends a loopback message to the target maintenance point at the central measuring engine, wherein the loopback message comprises a flow identity corresponding to one specific transmission path in a plurality of equal transmission paths to the target maintenance point. After receiving the loopback message, the target maintenance point sends a loopback replay message to the source maintenance end point, wherein the loopback replay message comprises a flow identity corresponding to a reverse common transmission path to the source maintenance end point. After receiving the loopback replay message and detecting to be correct, the source maintenance end point returns an announce of successful loopback detection. According to the inventive loopback detection method, the working mechanism of prior art loopback detection is expanded, and loopback detection can be performed on one specific path in a plurality of equal paths, thus allowing and providing high-speed transmission and detection of occurring flood by flood measurements in real-time or quasi-real-time.

According to the present invention, these objects are achieved particularly through the features of the independent claims. Additional features and advantages will become apparent to those skilled in the art upon consideration of the following detailed description of illustrative embodiments exemplifying the best mode of carrying out the method as presently perceived.

### Short description of the figures

The present disclosure will be described hereafter with reference to the attached drawings, which are given as non-limiting examples only, in which:
Figure 1 is a block diagram illustrating exemplary an architecture of the inventive flood measuring and trigger system 1 and method for triggering a dynamic parametric flood impact cover for physical objects 3/31 being measurably impacted by an occurrence of a flood event 4 by using an adaptive damage-cover structure 1031 of an electronic damage-signaling and/or damage-cover system 103 based on physical flood event measurements.
Figure 2 showing the physical impact of floods measured by monetary losses incurred in different countries, where the physical impact and damage of top floods is represented in terms of monetary losses (source:www.worldatlas.com).

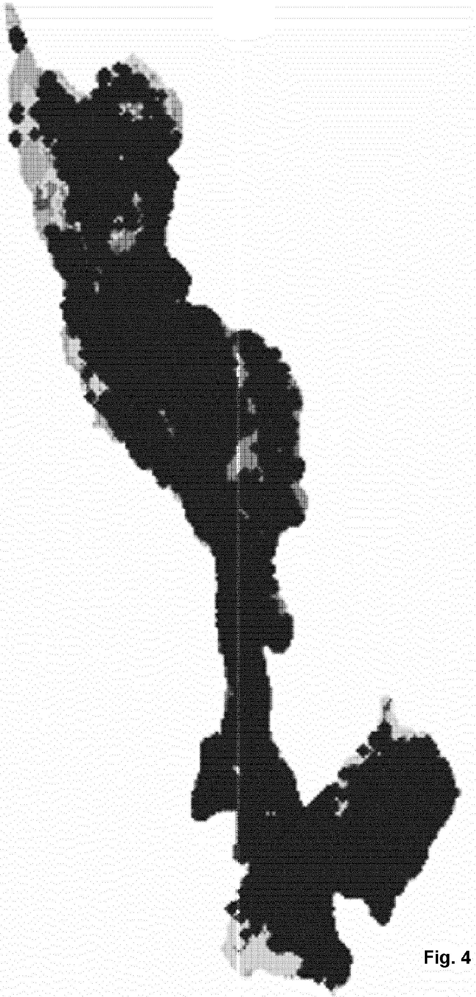

Figures 3 and 4 show diagrams schematically illustrating an exemplary structure scheme presenting an impact of flood event.
Figure 5 shows a diagram schematically illustrating an exemplary payout scheme used during occurrence of flood event in relation to the percentage of the flooded area.
Figure 6 shows a diagram schematically illustrating an exemplary overall operation of one embodiment of the method of the present invention.

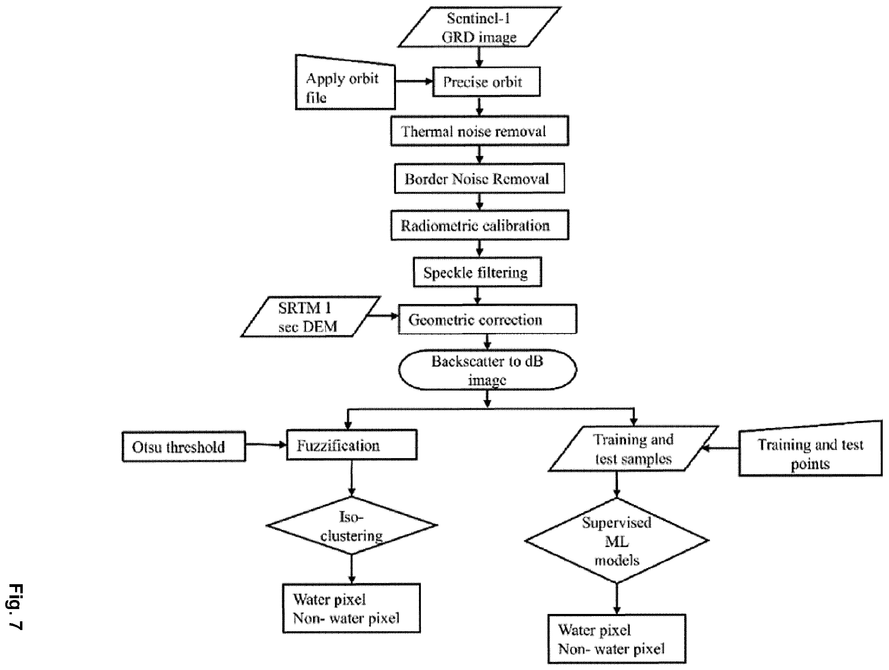

Figure 7 shows a diagram schematically illustrating an exemplary overall operation of one embodiment of the image processing in supervised and unsupervised machine structure to generate the flood maps.

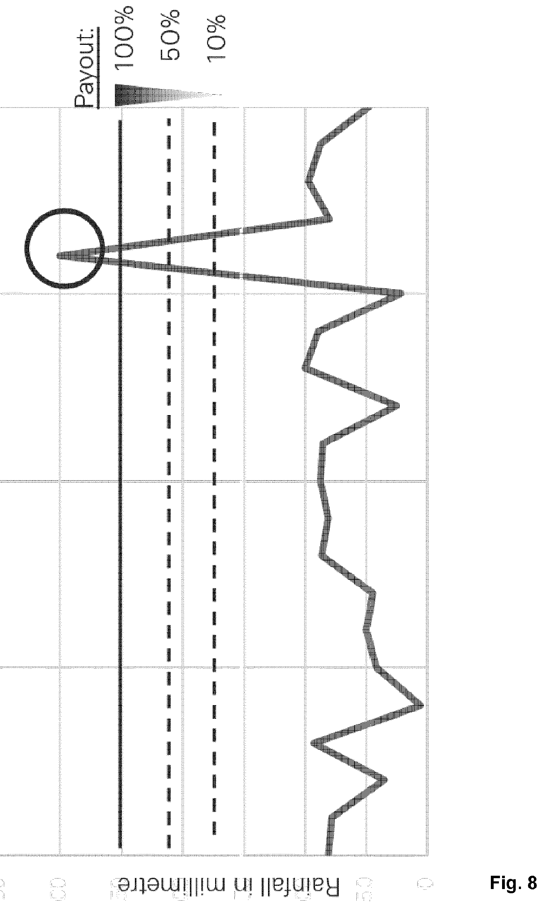

Figure 8 schematically illustrates an exemplary parametric risk-transfer relying on the measurement of a natural physical measuring parameter or index (parameter). Automated cover by a payout transfer given by a predefined amount is made when a predefined threshold of parameter/index is exceeded (e.g. amount of rainfall, flood at location).

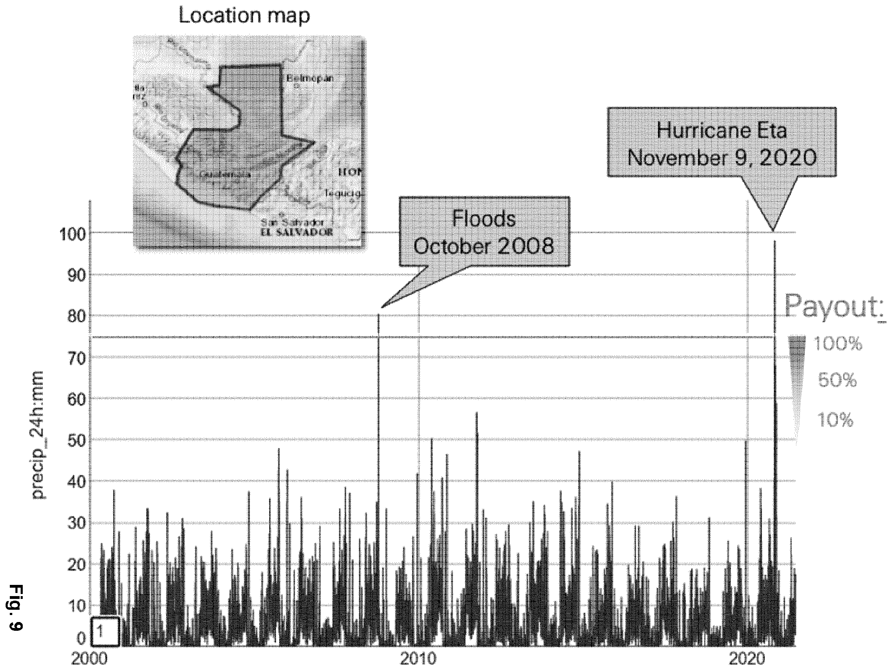

Figure 9 schematically illustrates an exemplary parametric excess rainfall risk-transfer (as a proxy for flood). Daily average rainfall amounts over Central America measured by satellite measuring data. An aggregated amount of rolling observation window (e.g. 2-days) must exceed pre-defined rainfall levels. It is to be noted that rainfall ≠ floods on the ground.

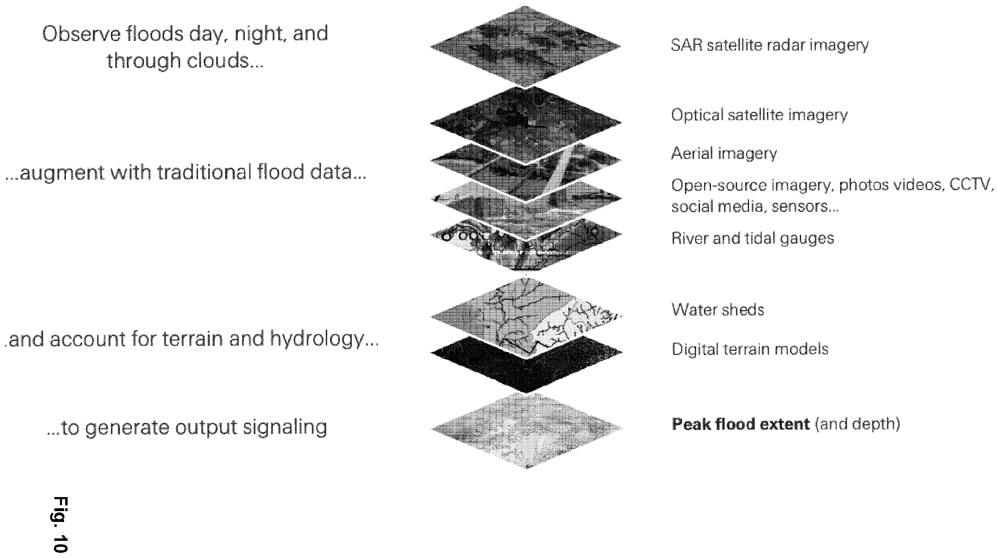

Figure 10 schematically illustrates an exemplary flood map generation through multi-source measuring parameter processing.

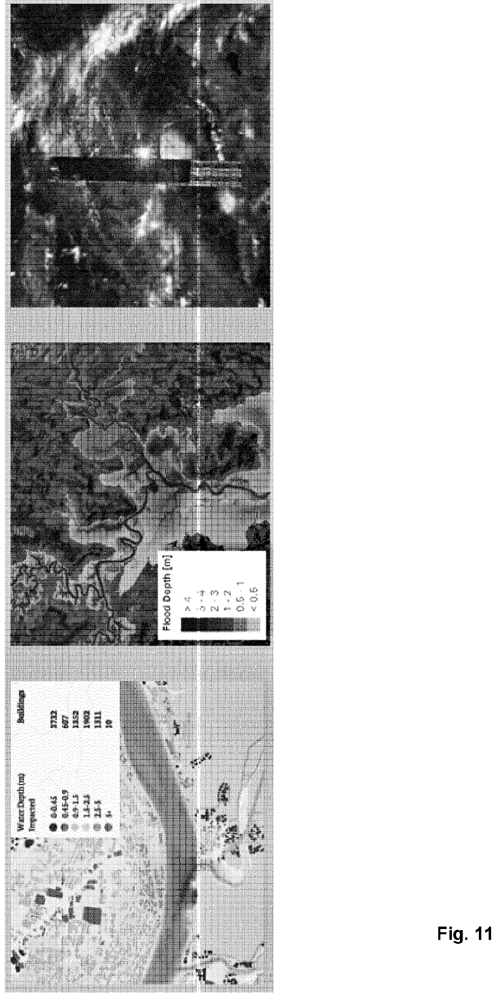

Figure 11 schematically illustrates an exemplary processing of flood event footprints, where satellite data are measured, an object level of a high spatial resolution up to 1x1 meter is achieved, daily observations with any non-permanent water for > 12 hours is detected and delivered near real time, and radar technology allows monitoring through clouds and at night.

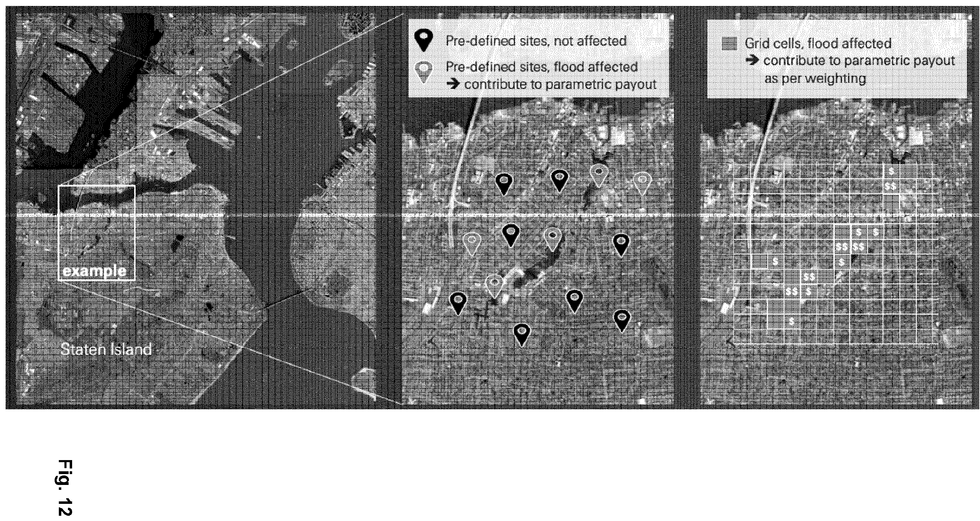

Figure 12 schematically illustrates an exemplary parametric flood risk-transfer structure triggered by the inventive flood measuring footprints based on maximum flood extent.
Figure 13 schematically illustrates an exemplary identification of critical sites or objects 3 and generating a grid over a geographic area 2 of interest at which a flood is measured. A flood extent mapping is provided by the system 1 within 24 hours after peak flood. The system 1 automatically detects if pre-determined sites were flooded. Cover with defined payout amounts for all affected sites and/or objects 3 can e.g. be provided within 30 days, thereby optimizing financial resilience and enable an immediate response.
Figure 14 schematically illustrates an exemplary flood map or digital elevation map from satellite imagery classification. Physical objects 3, as e.g. buildings or other constructions, can e.g. be automatically located using LiDAR which, inter alia, allows the system 1 to detect how close a physical object 3 lies or within which flood zones.

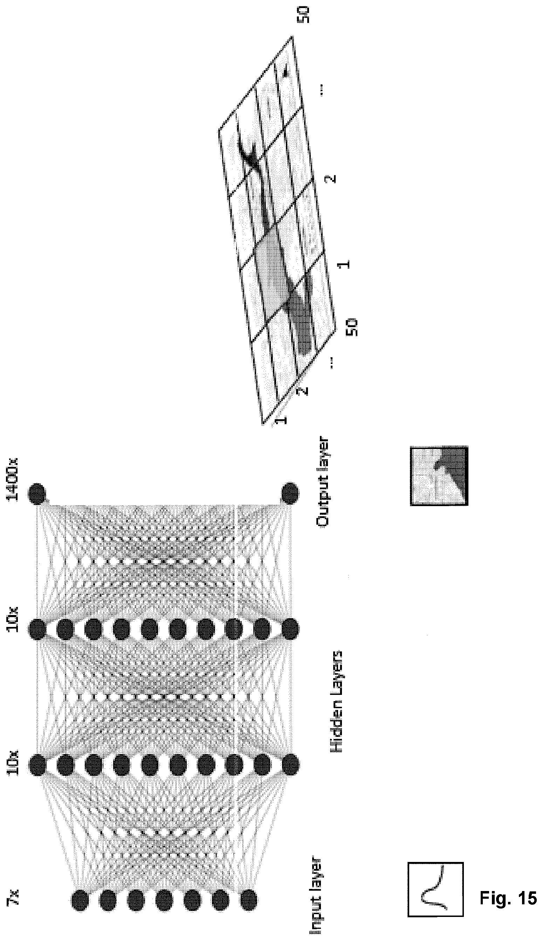

Figure 15 shows schematically a machine-learning setup. The geographic area 2 is divided in 50 × 50 grid cell 1003 raster each simulated by its own machine-learning structure. Input layer: seven input hydrographs. Output layer: flood inundation extent in each grid 1002 and/or grid cell 1003.
Figure 16 shows schematically grid cells 1003 based stream-flow measurements which can e.g. be an important measuring parameter that also impacts many other aspects as e.g. the river's hydrology and water quality.

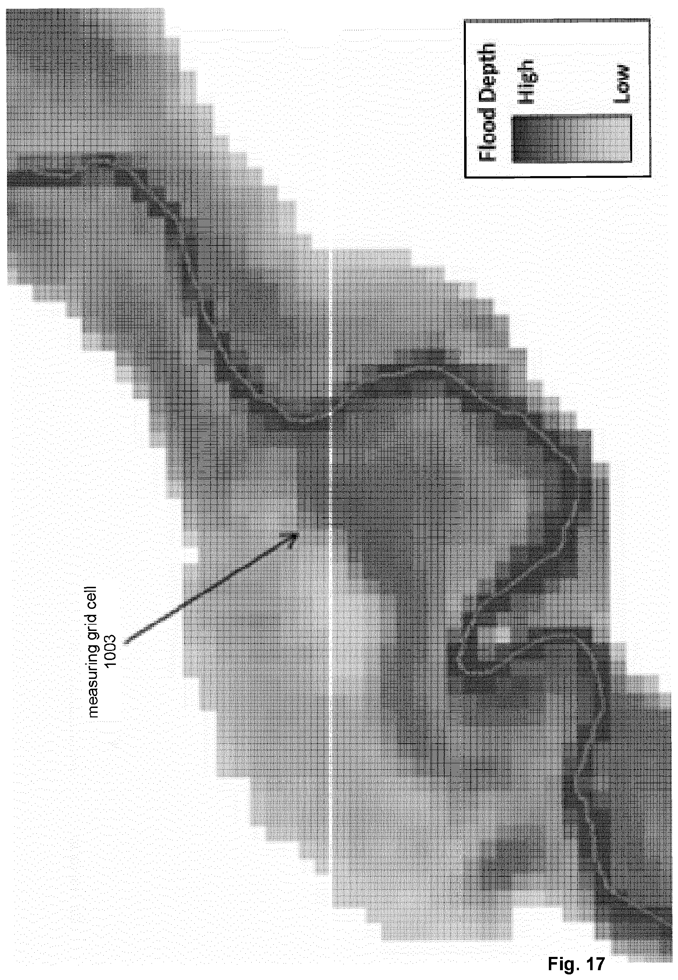

Figure 17 shows schematically an exemplary flood grid 1002 measuring flood depth, where the darker areas represent greater flood depths
Figure 18 shows schematically exemplary dynamically adjusted grid cells 1003, wherein the cells 1003 are chosen to be dynamically adapted by the system 1, where areas closer to the flooding and/or river etc. are applied with a high measuring resolution than areas further away. This allows a more precise measurement of flooded areas 21 than achieved by the prior art systems.

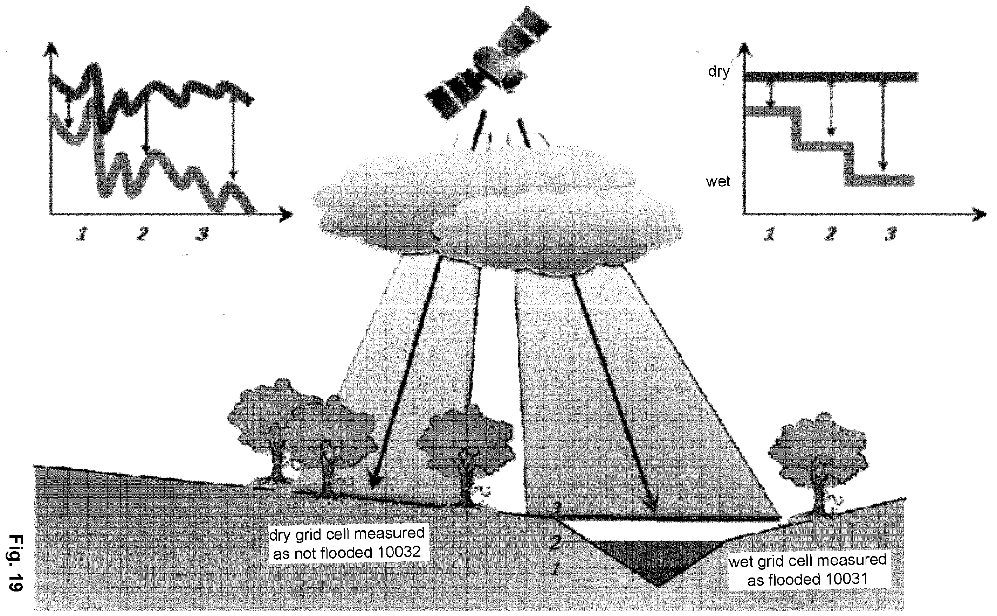

Figure 19 shows schematically exemplary measurements of the geographic area 2 by satellite measurements detecting flooded grid cells 1003 and not flooded grid cells 1003. The influence of clouds is eliminated by comparing and/or calibrating dry and wet measuring signals (left diagram). Water has a lower brightness temperature measured than land (right diagram).

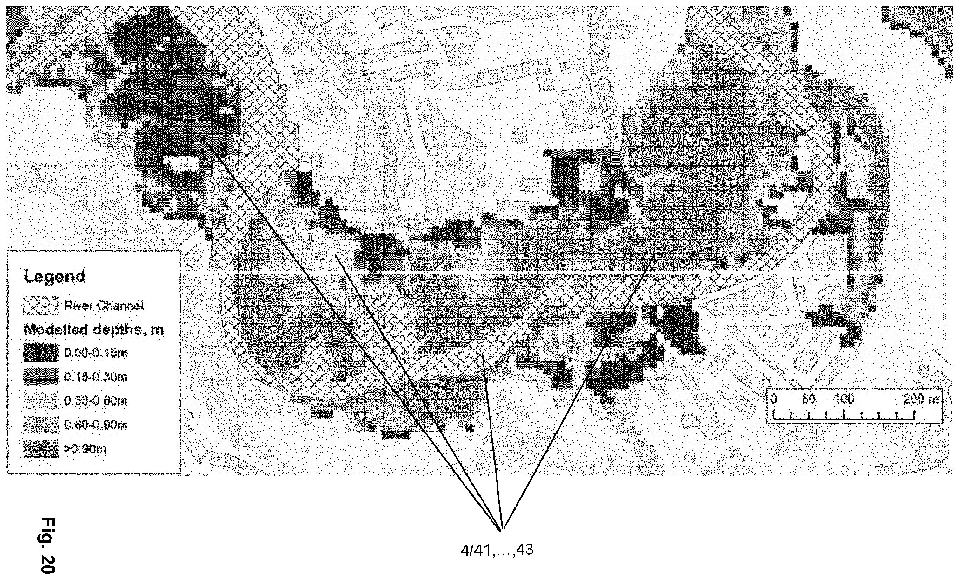

Figure 20 shows schematically exemplary measurements a flood event 4/41,...,45 in a geographic area 2 based on grid cell measuremetns.

### Detailed description

Figure 1 shows an exemplary architecture for an optical-based measuring and/or forecasting system 1 and according method for measuring a quantitative flooding extent 44 and/or a flooding impact measure 45 for physical objects 3 located within a topographic and/or geographic area 2 impacted by an occurrence of a flood event 4.

By of satellite-based and/or airplane-based aerial remote sensing devices 1023/1024 of an optical-based measuring and/or forecasting system 1, optical imaging sensory data 1021 are measured and said optical imaging sensory data 1021 are transmitted via a data transmission link 111 to a central ground station 10. The occurrence of the flood event 4 can e.g. be detected using loopback signaling 1022. The affected area 21 can e.g. be measured using on-air imaging devices.

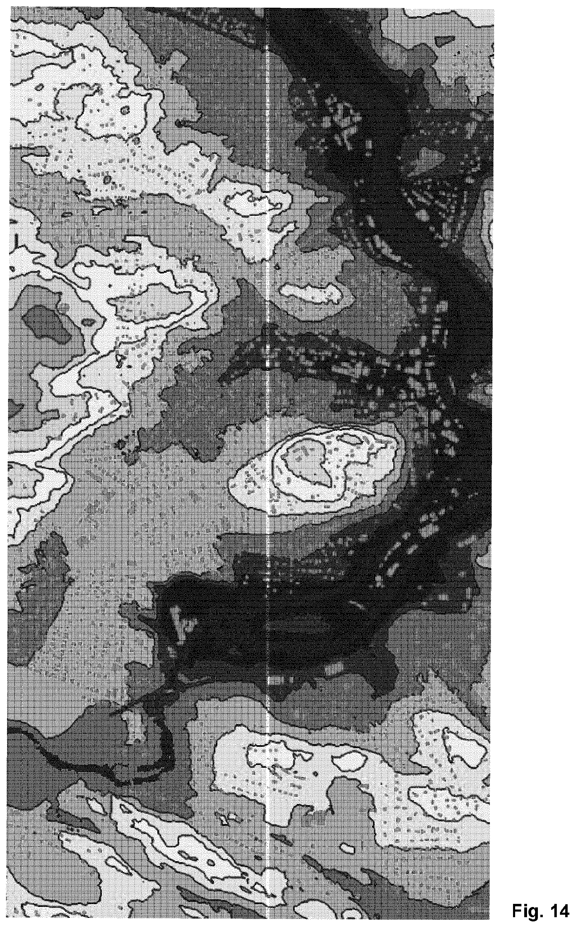

To capture flood exposure or flood risk measuring data and to automatically trigger actions or alarm systems, detailed flood measuring parameters values 1021 are measured on depth of flooding and/or probability of flooding and/or other flooding characteristics, transmitted to the central measuring engine 10 and stored as grid measuring datasets (see figure 14, where the darker areas represent greater flood depths). The measuring grid cells 1003 can e.g. be realized as a digital raster dataset that defines geographic space as an array of equally or adjustably sized square cells 1003 arranged in rows and columns. The value in each cell represents the magnitude in that location of the flooding characteristic represented by that particular grid. Within a flood measuring parameter database, grids 1002 can be produced to reflect water surface elevations and/or depths and/or velocities and/or percent-annual-chances of flooding and/or other measuring values. The grids 1002 can e.g. be chosen based on the topography of a geographic area 2, e.g. being unique to coastal areas and dams.

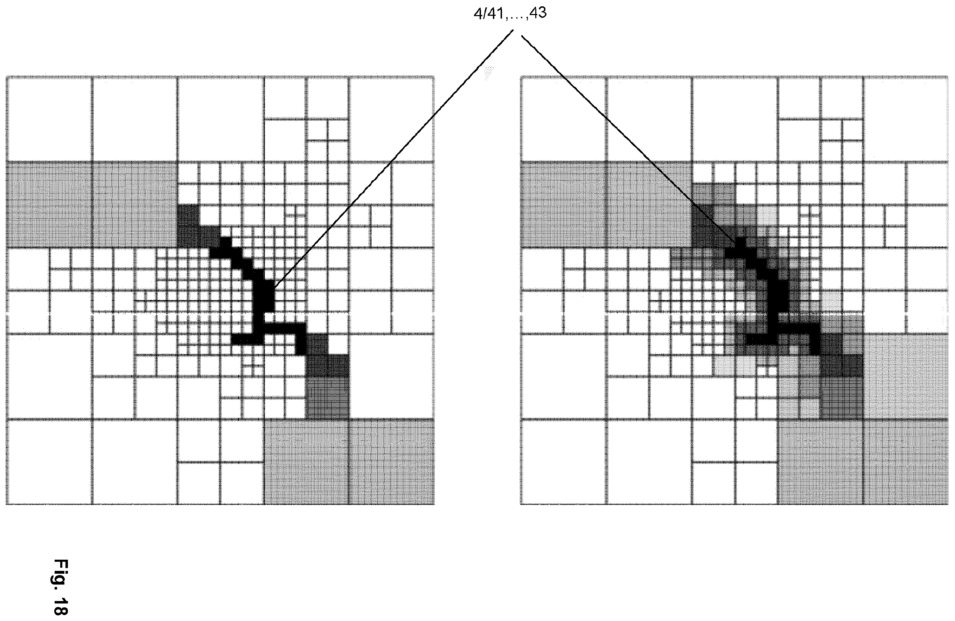

In one embodiment variant, for the grid cell resolution, it should e.g. be taken into account when selecting the cell size 10033 for the grids 1002, that the depth and measuring grid cells 1003 have an inherent relationship to the underlying topographic data used during the development of the flood hazard delineations, which can e.g. be depicted on the flood risk rate map. The raster cell size (resolution) 10033 of all raster datasets measured should be based on the density of the ground elevation data used and the appropriate precision that can be supported by the measurements. Normally, all the gird measuring datasets can e.g. use the same grid cell size 10033. However, the cell size 10033 for the grids 1002 can e.g. be no larger than 3 x 3m. This will allow for a more accurate depiction and retrieval of the measuring values from that grid dataset. In the present system 1, a two dimensional horizontal modeling structure can e.g. be applied to get the detailed and accurate map of water levels and/or flood patterns and/or potential flood exposed areas. Instead of equal sized grid cells 1003, also structured curvilinear grids 1002 can e.g. be used for the hydraulic forecast processing, where the curvilinear grid cells 1003 provide a precise forecast output signaling by allowing cell stretching along river main channels while orthogonality stays within reasonable bounds. However, the use of curvilinear grid cells can e.g. result in a high resolution in sharp inner bends since grid lines are focused on the bends. A technically not required high resolution can strongly increase computational and processing time. In a preferred embodiment variant, the measuring grid cells 1003 are chosen to be dynamically adapted by the system 1 (see figure 18), where areas closer to the flooding show a high resolution than areas further away. This allows a more precise measurement of flooded areas 21 than achieved by the prior art systems.

The flood measuring and trigger system 1 comprises flood detection devices and/or flood sensors 102 for measuring an occurrence of a flood event 4 by measuring floodings at the mesh network points 10081, i.e. within grid cells 1003 of the spatial grid 1002, wherein flood measuring parameters 1021 of the flood detection devices and/or flood sensors 102 are transmitted to the central measuring engine 10 and wherein, based on the transmitted flood measuring parameters 1021, grid cells 1003 measured as flooded are contributing to the area 21 measured as affected while grid cells measured as not flooded are not contributing to the area 22 measured as affected. The geographic area 2 can e.g. comprise surveyed landscape representative of area covered by dry land 24 and wetland 25. The geographic area 2 can e.g. comprise at least parts definable as automatically excluded from the dynamic parametric flood impact cover 1031. The occurrence of the flood event 4 can e.g. be detected using loopback signaling 1022 for the signaling of the flood detection devices and/or flood sensors 102. The herein proposed technical loopback mechanism is especially shaped for the flood detection providing an inventive loopback flood detection method and system. A source maintenance end point at the flood area sends a loopback message to the target maintenance point at the central measuring engine, wherein the loopback message comprises a flow identity corresponding to one specific transmission path in a plurality of equal transmission paths to the target maintenance point. After receiving the loopback message, the target maintenance point sends a loopback replay message to the source maintenance end point, wherein the loopback replay message comprises a flow identity corresponding to a reverse common transmission path to the source maintenance end point. After receiving the loopback replay message and detecting to be correct, the source maintenance end point returns an announce of successful loopback detection. According to the inventive loopback detection method, the working mechanism of prior art loopback detection is expanded, and loopback detection can be performed on one specific path in a plurality of equal paths, thus allowing and providing high-speed transmission and detection of occurring flood by flood measurements in real-time or quasi-real-time.

According to the invention, the above-mentioned objects related to an spaceborne sensory satellite and/or airborne sensory and drone-based flood measuring system and method for precise measuring of flood elevations and/or precise forecasting of quantitative flooding elevation measure values and/or flood impact measures on objects within a selected topographic and/or geographic area impacted by an occurrence of a flood event, are achieved particularly by (i) capturing available location data comprising aerial and/or spaceborne optical measuring data and/or surveying measurement data for the selected area, (ii) by measuring, by means of satellite-based and/or drone-based remote sensing devices, digital imagery sensory data and transmitting said imagery sensory data via a data transmission link to a central ground station, (iii) leveraging selectively and directedly the captured location data by the satellite and/or drone sensory measurements to leveraged measuring data and generate location-dependent elevation measurands based on the leveraged measuring data, and (iv) capturing, by a predefined data structure of a flood map generator, a geographic and/or topographic area to be covered, the data structure at least comprising definable area parameters capturing geographic location and/or geographic extent of said geographic and/or topographic area, and generating, by the flood map generator, a flood map with the measured elevation measurements based on the transmitted drone sensory data and the leveraged measuring data using the predefined data structure.

This has, inter alia, the advantage that the inventive system allows for a quasi-real-time flood assessment and satellite-sensory and/or drone-sensory based precise measurement. The measuring system can be realized as a web GIS digital platform allowing users to navigate areas of interest and assess flood risks with the respect to return periods, rainfall data and inundation heights. In addition, the measuring system can e.g. act as an expert system providing precise measurements for loss prevention recommendations. Further, the measuring system is able to provide precise "what if scenario simulations and forecasts", e.g. by using machine-learning-based forward looking structures. The input parameters of the machine-learning-based forward looking structure can e.g. be varied to detect and identify areas where additional drone-based sensory measurements, e.g. regarding spatial resolution of the measuring data and/or precision of the elevation measurements etc., increase the measuring precision of the system. Such aeras for additional drone-based sensory measurements can also be identified by user-specific selection, where in the measuring system refines and augments the measuring precision of the drone-based measurements upon request and selection. By the present measuring system, the user can e.g. be enabled to draw a structure whit a given height and is enabled to specifically simulate dedicated measuring and/or forecasting results and/or specified parts of the measurements, e.g. in respect to location, extend of the area, precision of the elevation measurements etc.. In particular, the user is enabled to specifically simulate results to see how much inundation can be protected using definable and adaptable embarkments height.

For example, an embodiment variant can e.g. comprise two stages (e.g. offline and online stages) based on the drone-based elevation measurements. The system is initialized in the first stage by collecting the required airborne and/or spaceborne captured imagery. These imagery represent different flood levels as well as imagery without any flood in the areas of interest. Due to the scarcity of the imagery in unusual situations like flood disasters, the collected imagery can e.g. be preprocessed by a data augmentation module to synthetically generate new images enabling the efficient application of deep learning techniques. Then, the system can e.g. build an object detection modelling structure, for example, using R-CNN by retraining the network on the available imagery. This modelling structure is responsible for classifying and segmenting objects in the airborne and/or spaceborne captured images, including e.g. buildings and cars. Based on the information obtained from each optical imagery, the system can e.g. use an object processing module to decide whether to consider or filter out the objects within the imagery. After that, the system can e.g. build and train a water level estimation model for identifying the water level from the objects detected in each image. During the second phase, the imagery captured by aerial and/or space-based optical sensing device can e.g. be forwarded to the object detection model, which is trained in the offline stage, for identifying and locating objects in the scene. These objects are fed to the water level estimation to measurably estimate the water level in the cell or area based on the optical sensed measuring values.

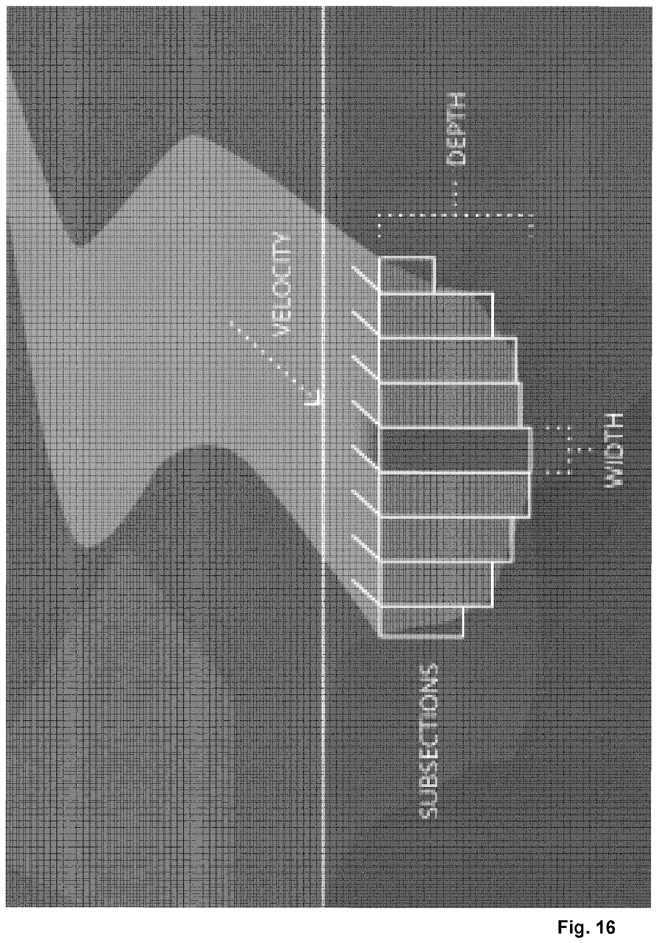

It is to be noted that the present inventive measuring system 1 can e.g. in an embodiment variant also be used as flood warning system 1. Monitoring is important: While some areas are more exposed to flooding than others, situating measuring devices and flood sensors 102 near waterway or body of water can provide additional critical and precises in-loco measuring data. This additional measuring data can e.g. be used to calibrate the measuring data extracted from the air-borne or space-borne sensory measurements. The affected area 21 can e.g. be measured using gages and telemetry equipment 1025. The present inventive system 1 is based on the regular measuring of local rainfall, stream level, and streamflow data in each grid cell 1003. This can be real-time monitoring with telemetry allowing for the fastest possible response to a flood event. It is clear that a real-time flood warning system 12/121,...,123 can reduce risks involved with flooding. The affected area 21 can e.g. be measured using at least partially air-based and/or space-based optical measuring devices 1023/1024 using digital image recognition processing (see figure 16). The present system 1 forecasts floods using the below described model structures for forecasting how rivers and streams respond to varying levels of measured rainfall and snowmelt. These forecast processing are based on already measured data records of flood level and/or stream stage and/or discharge, the generation for which are outlined below.

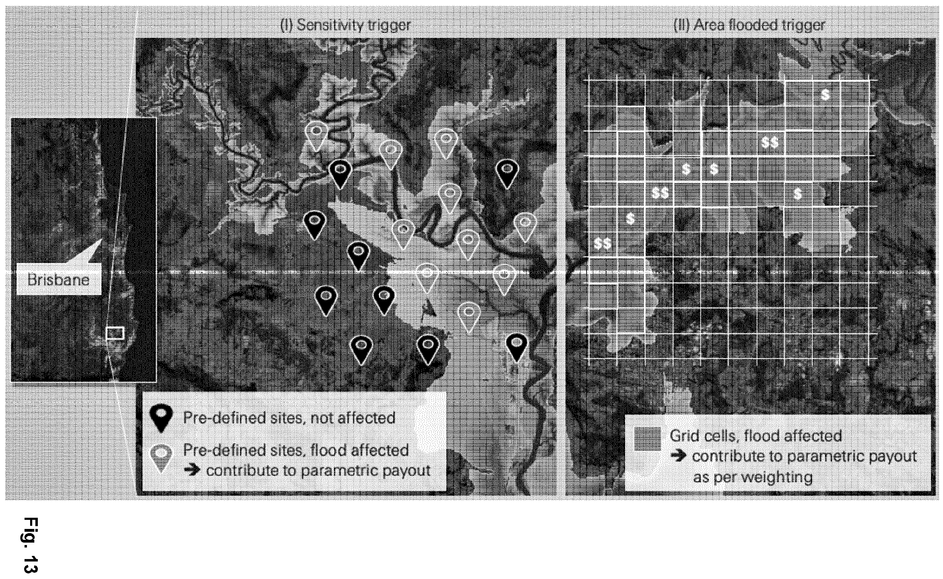

There are a broad variety of automated stream gages that can transmit stream level data via telemetry. Gages developed according to the NWS ALERT protocol are among the most common. However, it's to be noted that many other gages designed to measure precipitation and water level operate under similar principles, and this guide may be applicable to certain aspects of other systems. The gages, used herein, perform two primary tasks: sensing and communicating. The gages, as used herein, employs sensors to detect changes to measuring parameters, e.g. precipitation volume and/or water level. As an embodiment variant, the used gages may also be equipped with temperature and wind speed sensors. Some gages can also provide site-specific measuring data regarding the health or technical status of the measuring unit. For example, for the present inventive system 1, the gage can e.g. be designed to detect a particular "event", e.g. 1 millimeter of rainwater entering the gage's tipping bucket through the top of its funnel. When the bucket tips, it pours out any water within, engaging a switch that transmits alert data and resetting the bucket. Any other sensors on the gage will also activate the alert data transmitter after detecting said specific event. On days without rain, the gages can e.g. transmit a "no rain" report to show that the device 102 is still working. In the embodiment variant with automated flood warning 12/121,122,123 the system 1 can e.g. use radio, cellular, or satellite telemetry to communicate with an alarm host computer or alarm network. The system 1 can also specifically operate alarm signals using radio frequencies and/or satellite and/or cellular telemetry. For the present system 1, it is to be noted that while streams and rivers can be monitored for many mearing qualities and parameters that they share with lakes, ponds and basins, streams and rivers possess one quality that differentiates them from other freshwater bodies, namely their movement. For the forecast processing by the present system, stream-flow can e.g. be an important measuring parameter that impacts many other aspects of a river's hydrology and water quality (see figure 13).

A geographic and/or topographic area 2 to be covered is captured by a predefined data structure 1005 of a flood map generator 100. The data structure 1005 at least comprises definable area parameters 10051 capturing geographic location 100511 and/or geographic extent 100523 of said geographic and/or topographic area 2, and generating a flood map 1007 by the flood map generator 100 based on the transmitted optical imaging sensory data 1021 using the predefined data structure 1005. The geographic and/or topographic area 2 can e.g. comprise unvarying landscape representative of area covered by dry land 24 and wetland 25.

Equally spaced network points 10081 over said geographic and/or topographic area 2 are generated providing a meshed network 1008 of network points 10081 having a definable mesh size 10082 and covering the whole geographic and/or topographic area 2. A gird 1002 of grid cells 1003 over geographic and/or topographic area 2 is defined by the meshed network 1008 each grid cell 1003 having a network point 10081 as a centroid and wherein the geographic and/or topographic area 2 is completely covered by the grid cells 1003 of the grid 1002. The network points 10081 can e.g. be regularly spaced or adjusted to geographic or topographic characteristics within the mesh network 1008 with a pre-definable or adjustable spacing 10083. The network points 10081 can e.g. be essentially 0.005 x 0.005 deg mesh network points 10081. The network points 10081 can e.g. represent the corner points of two dimensional m x n blocks. The dimensional m x n blocks can e.g. be of approx. 8.72*10-5 radian.

After a measured occurrence of a flood event 4/41,...,43, for an affected area 21 of said geographic and/or topographic area 2 the total number of network points are aggregated within the affected area 21.

After the occurrence of the flood event 4, the affected area 21 of said geographic and/or topographic area 2 is measured based on measuring a flooding at each network point 10081 of the meshed network 1008 within the affected area 21 based on the flood map 1007. Network points 10081 measured as flooded 100811 are contributing to the measured affected area 21 while network points 10081 measured as not flooded 100812 are contributing to the area 22 measured as not affected. As an embodiment variant, network points 10081 are measured as flooded when each network point 10081 of a defined area is flooded. The mesh network points 10081 can measured as flooded 100811 can e.g. be determined using at least a machine-learning approach.

As an embodiment variant, the grid cells 1003 measured as flooded 10031 can e.g. be determined using at least an artificial intelligence as machine-learning approach based data-processing structure and/or a machine-learning-based data-processing structure. It is to be noted that the present inventive system generally can also be operated applying one or more types of numerical modeling structures for predictive flood parameter generation. For example, a hydrological rainfall run-off modeling structure can e.g. be used to forecast distributed river discharges. Also a one-dimensional (1D) drainage modeling structure can e.g. be applied based on the one-dimensional Saint-Venant flow forecasting to predict surcharges or drainages. Further, also a two-dimensional (2D) Saint-Venant flow forecast can e.g. be used for simulating the surface inundation, and obtain a forecasted maximum flood extents, maximum depths, and flow velocity on defined points on the surface. Furthermore, a 1D-2D coupling structure can be applied. All proposed embodiment variant relies on sensory and/or field measurements for capturing the inventive input parameters and their specific technical selection. However in a preferred embodiment variant, the system relies on a data-driven approach for establish a reliable flood forecast structure based on flood measurements. Unlike the numerical structure, the inventive data-driven, physical-based measuring and forecast system requires measuring input/output data only. The inventive data-driven structure has shown its high performance especially for the technical nonlinear flood forecast problems. In particular, ANN-based forecast structures can be applied, however the technical problem of over-fitting or under-fitting the measuring data, and insufficient length of the data sets can lead to erroneous forecast output results. To expand the data-driven forecast structures for short and long term flood forecasts, combined use of neurofuzzy structures and/or support vector machine (SVM) and/or support vector regression and/or artificial neural network (ANN) are also possible. More particularly, artificial neural network showed to be a reliable technique for the inventive flood prediction, as for forecasting water levels by applying ANN forecast structures to conventional hydrological modeling in flood-prone catchments. In another embodiment variant, the water level forecast results along a river uses backpropagation and/or conjugate gradient and/or cascade correlation. One possibility is to combine a Levenberg-Marquardt Backpropagation with cross-validation to prevent the under-fitting and overfitting in daily reservoir inflow forecasting.

Finally, in another preferred embodiment variant, the maximum flood inundation in a geographic area is determined by machine-learning based structure applying a backpropagation networks based on multiple inflow measuring data for a grid resolution of m × n. This ANN technique allows for a geographic area to provide high-resolution flood inundation maps from river flooding. For the prediction of maximum flood inundation, only the real-time discharges of the upstream catchments or flood level measurements are needed. The procession consists of two phases: the training phase collects a part of the measuring data from the existing database, tuning the model by changing the weights on input arcs to minimize the bias on the output layer; the recalling phase produces the new outputs for the testing inputs. The rest individuals in the training dataset are used for evaluating the behavior of the network structure. The total bias between the output of ANN and the observed values is defined as the error function. In order to reduce the error function in each iteration, the weights are modified automatically by the system 1. Herein, the learning rate is used for automatedly scaling the gradient in each iteration of the weight update. It is to be noted that the system can be sensitive to select up the correct value, since a large learning rate can miss the optimal point, while a small learning rate can slow the training process. For example, the gradient descent algorithm can be used by the system 1 to generate the update of the weights values. To speed up the convergence of the iteration, resilient backpropagation can e.g. be applied in the present case for treating the update of weight values differently depending on the derivative of the error function. For optimization, larger alternative learning rate can e.g. be set for speeding up the iterations if the error gradient remains in the same direction in neighboring time-steps and smaller alternative learning rate when approaching the optimal weights.

Due to the total number data of measuring grid cells 1003 (resolution of m x n), a single hidden layer can exceed 365 thousand elements. To technically optimize the storage requirement and the ANN structure training time, the geographic area 2 can e.g. be subdivided into 50 × 50 cell-squared grids 1002, each grid 1002 having its own independent ANN structure (the output layer having 1400 elements). It is to be noted that with the same inventive technical approach, instead of measuring the real-time discharges of the upstream catchments for the prediction of maximum flood inundation, rainfall measurements and/or flood level measurements can be selected as input measuring values for the machine-learning-based structure. To optimize the ANN processing technically further, clustering can be applied to the training measuring dataset. Like this, the size of the training measuring dataset can optimize and reduced while still keeping the main representative events. As such the training time can be reduced and the overfitting effects minimized. Further, to measure the technical performance of the prediction processing of maximum flood inundation by the applied ML structure, the mean squared error (MSE) of each grid can e.g. be used. It is assumed that the flood maps from the events used are the observed values. As each grid 1002 has its own independent training network, the MSE can e.g. be measured using all the grid cells 1003 in each grid 1002.

The flooding extent value 44 and/or flooding impact measure value 45 of the affected area 21 is measured based on the network points 1008 measured as flooded 10081 to the total number of network points of the geographic and/or topographic area 2.

A dynamic parametric flood impact cover 1031 for a physical object 3/31 physically impacted by the occurrence of the flood event 4 is generated by the system 1 by using an adaptive damage-cover structure 1041 based on the measured flooding extent value 44 and/or the flooding impact measure value 45. The parametric coverage 1031 is generated covering a possible loss associated with the occurrence of the flood event 4 impacting the geographic area 2 measured by the affected area 21, as per the adjustable damage-cover structure 1041 a flood threshold measure 1031 is triggered by an electronic threshold-trigger 103. The threshold-trigger is selected from a measured percentage value 23 given by the measured affected area 21 to the geographic area 2 or the measured affected network points 100811 to the total number of network points 100813. By an electronic payment transfer module based on the generated parametric coverage 1031 monetary pay-out parameter values are transferred by electronic payment transfer to an impacted physical object 3/31 and/or a risk-exposed individual associated with an impacted physical object 3/31. A premium value can e.g. be generated based on the payout coverage 1031 associated with a measurement.

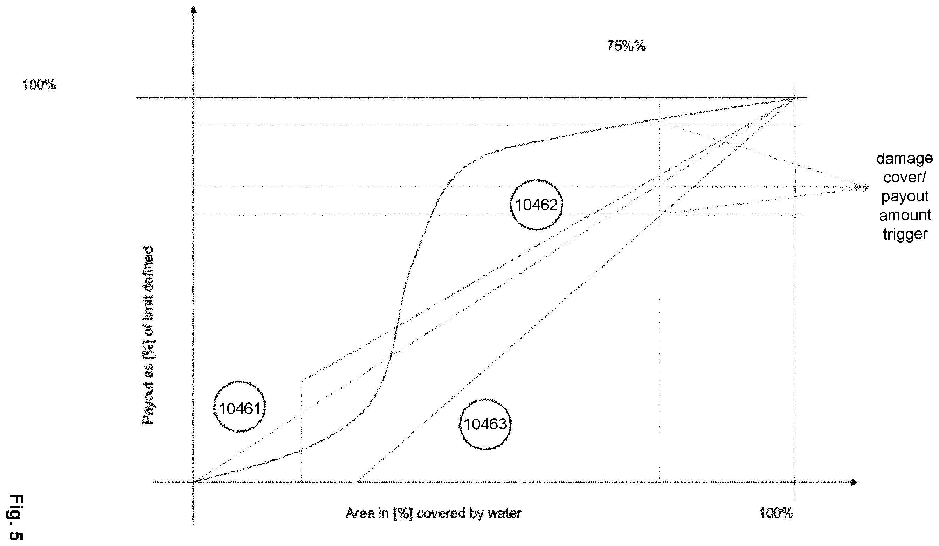

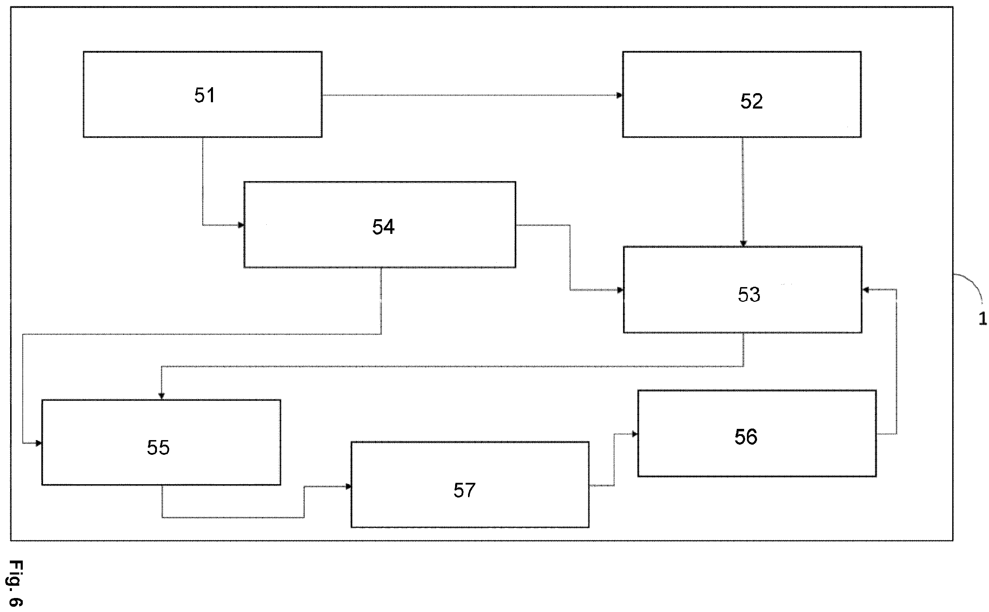

Figure 6 shows an exemplary schematic process of the present invention, which illustrates an overall operation of an embodiment of an automated system providing a dynamic parametric flood impact cover for an object physically impacted by the flood and/or to an individual assigned to the impacted object. An automated system 1, is disclosed for providing a dynamic parametric flood impact cover to flood impact exposed physical objects 3 and/or a flood risk exposed individual in case of an occurrence of a flood event 4. The dynamic parametric cover 1031 is provided by using an adaptive risk-transfer structure 1041 based on physical flood event measurements. In one embodiment, at reference number 51, a trigger is generated by a trigger module and the trigger is activated upon occurrence of the flood event. The trigger may provide measuring data 1021 corresponding to such as flood extent, flood depth. The generation and measurement of measuring data 1021 related to the flood event 4 is explained in detail in conjunction with Figure 5 of the present invention. At reference number 52, an embodiment variant with a payout function 1046 is shown, where the payout function 1046 is activated (at reference number 52 and triggers the payout calculation function (at reference number 53). The payout generated is dependent on occurrence of the flood event, regardless of actual loss incurred in the flooding event. The payout function is explained in detail in conjunction with Figure 5 of the present application. Further, in another embodiment, an independent third party system or an electronic reporting agent or broker or a third party calculation agent, at reference number 54) determines an intensity of the flood event. The independent third party/reporting agent provides the information to the object 3 or exposed individual (at reference number 54) to initiate payout generation and automatically triggering payout transfer (at reference number 53) and also informs to the individual (at reference number 55). In another embodiment, an automated module may be used to generate the payout, and automatically intimate the insured and initiate the payment. The exposed individual (at reference number 55) is the one who may purchase a cover specifying a maximum payout from the system 1 (at reference number 56). The maximum payout cover is based on extend of the flooded area 21. The premium (at reference number 57) is transferred to the system (at reference number 51) depends on the chosen limit as well as on the area 21 affected by the flood 4 (at reference number 55). In one embodiment, the premium is generated using probabilistic modelling structures, upon numerous reviews.

In one embodiment, at reference number 2, a trigger is generated by a trigger module and the trigger is activated upon occurrence of the flood event. The trigger may provide information corresponding to such as flood extent, flood depth. The generation of measuring data related to the flood event is explained in detail in conjunction with figure 1 of the present invention.

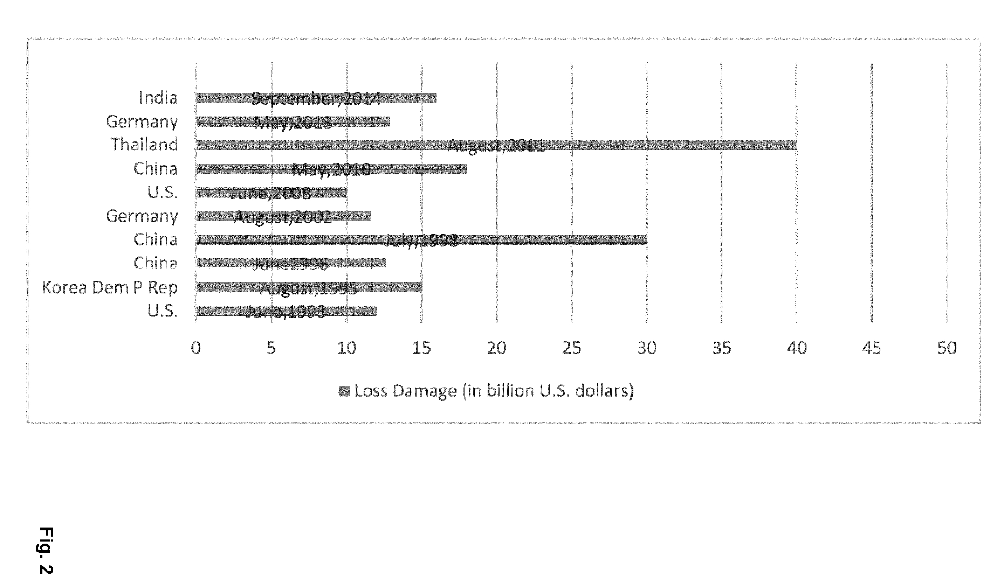

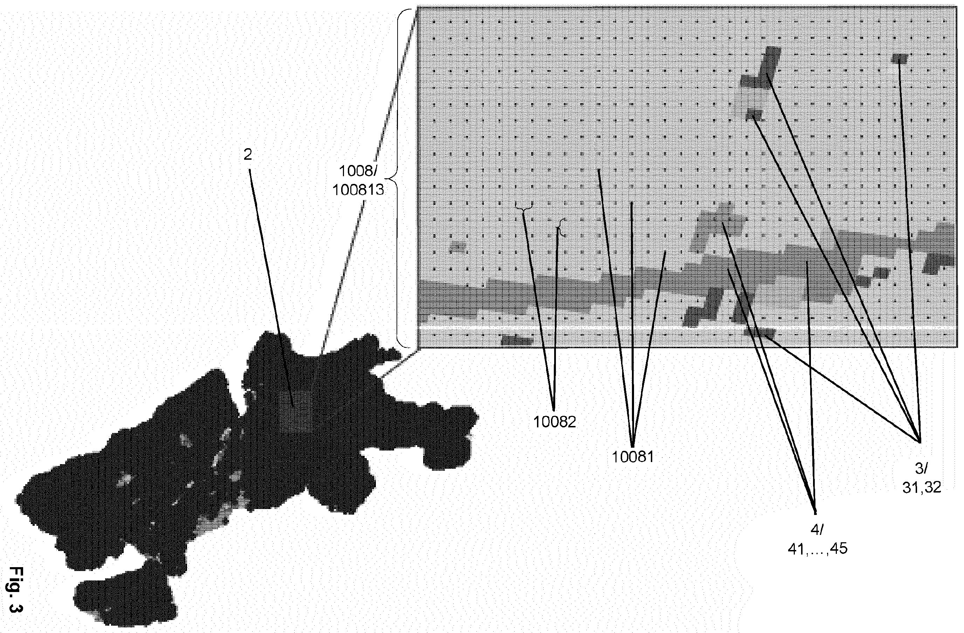

As is shown in figures 2 and 3, is a chart depicting a structure scheme presenting an impact of the flood event in a specific region. The trigger data may be obtained from highly reputed independent third party agency that are mutually in agreement with the individual. The third party agency may be, for example, use on-air imaging device such as Synthetic Aperture Radar (SAR) satellite imagery and drone based imagery that provide multiple images to capture flood depth and flood extend.

In one embodiment, the automated system 1 first measures an Area of Interest (AOI). The AOI is an extended flooded area of a total area cover of the region. The calculated AOI is then divided into a plurality of network points of a spatial mesh network. The network points defining the desired resolution, may be determined randomly or dynamically, for example, the network points can e.g. be regularly spaced within the mesh network with a pre-definable spacing. The network points can e.g. be essentially 0.005 x 0.005 deg mesh network points. In a variant, the network points may be defined representing the corner points of two-dimensional m x n blocks such as 500m X 500n (0.005x.005 deg.) blocks of approx. 8.72*10-5 radian. Upon occurrence of the flood event 4, an affected area (AA) is determined, by calculating the number of network points that are totally flooded.

In one embodiment, the mesh network points measured as flooded are determined using, for example, a machine-learning approach, a double mesh approach, and the like. In addition, the network cells measured as not flooded do not contribute to the measured affected area of the AOI.

Thereafter, the percentage (at reference number 10) of affected area is generated with the relation of AA/AOI. The payout is based on the pre-defined trigger depending upon the percentage of affected area.

With respect to Figure 5, a payout trigger structure used during occurrence of the flood event 4 in relation to topography and exposure distribution is shown via graph. In one embodiment, the payout function can be linear (10461) (straight linear), stepped or with (10462) deductibles (franchise deductibles (10463) The automated system selects payout functions based on topography and exposure distribution. The payout function may cater to different terrain and exposure distribution with respect to a geographic area. The payout function provides different payout functions to the individual, and the individual is free to select one of the payout function. The payout function may further include suggestions from the individual.

For determining the payout trigger structure, a parametric coverage for the measured affected area may be generated by covering a possible loss associated with occurrence of the flood event and impacting a geographic area measured by the affected area. The possible loss incurred due to occurrence of the flood event may be determined as per an adjustable risk-transfer structure, a threshold measure. The possible loss incurred may be triggered by a threshold-trigger that is selected from the percentage of the affected area given by the measured affected area to the geographic area (for example, the AOI). By way of an example, the geographic area may include unvarying landscape that represents area covered by dry land and wetland.

In one exemplary embodiment, the payout may vary from 0% to 100%. As shown, the measured affected area is around 75% and a limit of around USD 10m is determined under the payout scheme. The insured may receive around 0.75 x USD 100m or around USD 75m.

In another embodiment, an electronic payment transfer may be made to the individual by an electronic payment transfer module. The electronic payment transfer may be done based on generated parametric coverage monetary pay-out parameter values. The electronic payment transfer to be made to the individual is limited and may be predefined based on prior discussion or agreement with the insured. In some scenarios, the individual may provide information related to the geographic area to be excluded for coverage under the payout scheme. The triggering the adaptive damage-cover structure 1041 for covering physical damages or loss 32 associated with the measured occurrence of the flood event 4 can e.g. comprise generating a parametric coverage 1031 based on a cover activation signaling or electronic payout function 1046, and transferring, by an electronic payment transfer module, based on the output of the cover activation signaling or electronic payout function 1046a monetary pay-out by electronic payment transfer to cover the physical damages or loss 32 associated with the measured occurrence. The cover activation signaling or electronic payout function 1046 can e.g. comprise a linear payout function 10461 and/or a stepped payout function 10462 and/or a deductiblesbased payout function 10463. The cover activation signaling or electronic payout function 1046 can e.g. be selectable based on topography and/or exposure distribution. The cover activation signaling or electronic payout function 1046 can further e.g. be user-specific definable.

In yet another embodiment, the risk-assessment parameters used to determine occurrence of the flood event 4 may be accessed using a Machine Learning (ML) approach (see figure 6). The ML-approach may connect flood related measurements of various geographic areas for assessing and/or predicting overall risks by a risk transfer module. In addition, the MI approach may be used to predict a future risk pertaining to occurrence of the flood event, and/or allowing to associate varied losses incurred in the multiple geographic areas due to occurrence of the flood event leading to generation of risk factors for an associated reinsurance module.

While a number of features are described herein with respect to embodiments of the inventions; features described with respect to a given embodiment also may be employed in connection with other embodiments. The following description and the annexed drawings set forth certain illustrative embodiments of the inventions. These embodiments are indicative, however, of but a few of the various ways in which the principles of the inventions may be employed.

### List of references

1 Optical-based measuring and/or forecasting system (Flood measuring and trigger system)
   10 Central ground station (Central measuring engine)
      100 Flood map generator (Data aggregation and preprocessing module)
         1000 Data aggregation and preprocessing module
         1001 Dynamic grid splitter
         1002 Topographic or geographic grid
            10021,...,1002i Measuring parameters for grid cell i
         1003 Measuring grid cells
            10031 Grid cells measured as floated/affected
            10032 Grid cells measured as not floated/affected
            10033 Grid cell size
            10034 Grid shape
         1004 Persistence storage
         1005 Predefined data structure
            10051 Area parameter
            100511 Geographic location
            100512 Geographic extend
         1006 Machine-learning based or Al-based module
         1007 Flood map
         1008 Meshed network
            10081 Mesh network points
               100811 Network points measured as flooded
               100812 Network points measured as not flooded
               100813 Total number of network points of geographic area 2
            10082 Mesh size/Spacing between network points
      102 Flood measuring devices/ Flood measuring sensors
         1021 Flood measuring parameters
         1022 Loopback signaling
         1023 Air-based optical measuring devices
         1024 Space-based optical measuring devices
         1025 Flood measuring gages with telemetry equipment
      103 Electronic flood trigger
         1031 Dynamic parametric flood impact cover
         1032 Flood threshold measurands
         1033 Flood threshold value
      104 Damage-signaling and/or damage-cover system
         1041 Adaptive damage-cover structure
         1042 First resource-pooling system
            10421 First resources
         1043 Second resource pooling system
            10431 Second resources
         1044 Electronic cover activation signaling and triggering
         1045 Risk transfer parameter value optimization
         1046 Cover activation function / Electronic payout function (signaling)
            10461 Linear payout function
            10462 Stepped payout function
            10463 Payout function with deductibles (franchise deductibles)
   11 Data Transmission network
      1111 Data transmission link
   12 Alarm signaling devices
      121 Steering signaling to automated flood-alarm driven devices
      122 Acoustic alarm signal devices
      123 Digital alarm messaging system
2 Geographic and/or topographic area
   21 Affected area
   22 Not affected area
   23 Measured percentage value of affected area vs total geographic area
   24 Dry land area
   25 Wet land area
3 Physical Objects in the geographic area (Flood exposed object)
   31 Physical object in a grid cell
   32 Physical damage or loss to the object impacted and caused by the occurring flood event
4 Flood event
   41 Temporal occurrence
   42 Geographic / topographic location
   43 Event Strength
   44 Flood extend
   45 Flood impact measure
5 Process Flow
   51 Central measuring engine with cover activation signaling and triggering
   52 Damage cover activation by resource transfer / Payout function
   53 Payout parameter value generation and payout Trigger
   54 Electronic reporting / Independent third party system
   55 Flood exposed object / Risk exposed individual
   56 Damage-cover system / Risk-transfer system
   57 Automated pricing / Premium transfer

## Claims

1. An optical-based measuring and/or forecasting method for measuring a quantitative flooding extent (44) and flooding impact measure (45) for physical objects (3) located within a topographic area (2) impacted by an occurrence of a flood event (4), comprising measuring by means of satellite-based and airplane-based aerial remote sensing devices (102/1023/1024) of an optical-based measuring and/or forecasting system (1), optical imaging sensory data (1021) and transmitting said optical imaging sensory data (1021) via a data transmission link (111) to a central ground station (10), comprising:
capturing a geographic and/or topographic area (2) to be covered by a predefined data structure (1005) of a flood map generator (100), the data structure (1005) at least comprising definable area parameters (10051) capturing geographic location (100511) and geographic extent (100523) of said geographic and/or topographic area (2) and measuring parameters related to measurands depending on the physical, location-dependent event strength, location, and measured time window, and generating a flood map (1007) by the flood map generator (100) based on the transmitted optical imaging sensory data (1021) comprising at least measured elevation measurements based on transmitted drone sensory data and location data using the predefined data structure (1005), wherein the flood map is generated by the flood map generator (100) through multi-source measuring parameter (1021) processing based on measured satellite radar imagery at least augmented with measured flood data optical satellite imagery and aerial optical imagery and accounting for terrain and hydrology by water sheds measuring data and digital terrain modelling the flood map (1007) comprising peak flood extend and depth,
generating spaced network points (10081) over said geographic and/or topographic area (2) providing a meshed network (1008) of network points (10081) having a definable mesh size (10082) and covering the whole geographic and/or topographic area (2), wherein a gird (1002) of grid cells (1003) over the geographic and/or topographic area (2) is defined by the meshed network (1008) each grid cell (1003) having a network point (10081) as a centroid, wherein the geographic and/or topographic area (2) is completely covered by the grid cells (1003) of the grid (1002), wherein the network points (10081) are adjusted to geographic or topographic characteristics within the mesh network (1008) with an adjustable spacing (10083), and wherein after the occurrence of the flood event (4), the affected area (21) of said geographic and/or topographic area (2) is measured based on measuring a flooding at each network point (10081) of the meshed network (1008) within the affected area (21) based on the flood map (1007),
detecting an occurrence of a flood event (4) by using a loopback signaling (1022) for signaling of the satellite-based and airplane-based aerial remote sensing devices (102/1023,1024),
aggregating, after a measured occurrence of a flood event (4/41,...,43), for an affected area (21) of said geographic and/or topographic area (2) the total number of network points within the affected area (21), wherein network points (10081) measured as flooded (100811) are contributing to the measured affected area (21) while network points (10081) measured as not flooded (100812) are contributing to the area (22) measured as not affected, and
measuring the flooding extent value (44) and/or flooding impact measure value (45) of the affected area (21) based on the network points (1008) measured as flooded (10081) to the total number of network points of the geographic and/or topographic area (2).

2. An automated method according claim 1, **characterized by** further providing a dynamic parametric flood impact cover (1031) for a physical object (3/31) physically impacted by the occurrence of the flood event (4) by using an adaptive damage-cover structure (1041) based on the measured flooding extent value (44) and/or the flooding impact measure value (45),
generating the parametric coverage (1031) covering a possible loss associated with the occurrence of the flood event (4) impacting the geographic area (2) measured by the affected area (21), as per the adjustable damage-cover structure (1041) a flood threshold measure (1031) is triggered by an electronic threshold-trigger (103), wherein the threshold-trigger is selected from a measured percentage value (23) given by the measured affected area (21) to the geographic area (2) or the measured affected network points (100811) to the total number of network points (100813); and
transferring, by an electronic payment transfer module, based on the generated parametric coverage (1031) monetary pay-out parameter values by electronic payment transfer to an impacted physical object (3/31) and/or a risk-exposed individual associated with an impacted physical object (3/31).

3. Method according to one of the claims 1 or 2, **characterized in that** network points (10081) are measured as flooded when each network point (10081) of a defined area is flooded.

4. Method according to one of the claims 1 to 3, **characterized in that** the network points (10081) are regularly spaced within the mesh network (1008) with a pre-definable spacing (10083).

5. Method according to claim 4, **characterized in that** the network points (10081) are essentially 0.005 x 0.005 deg mesh network points (10081).

6. Method according to one of the claims 4 or 5, **characterized in that** the network points (10081) represent the corner points of two dimensional m x n blocks.

7. Method according to claim 6, **characterized in that** the dimensional m x n blocks are of approx. 8.72*10-5 radian.

8. Method according to one of the claims 1 to 7, **characterized in that** the topographic area (2) comprising unvarying landscape representative of area covered by dry land (24) and wetland (25).

9. Method according to one of the claims 1 to 8, **characterized in that** the occurrence of the flood event (4) is detected using loopback signaling (1022).

10. Method according to one of the claims 1 to 9, **characterized in that** the mesh network points (10081) measured as flooded (100811) are determined using at least a machine-learning approach.

11. Method according to one of the claims 1 to 10, **characterized in that** the affected area (21) is measured using on-air imaging devices.

12. Method according to one of the claims 1 to 11, **characterized in that** a step of generating a premium value based on the payout coverage (1031) associated with a measurement.

13. An optical-based measuring and forecasting system (1) for providing a dynamic parametric cover (1031) in case of a measured occurrence of a flood event (2) by using an adaptive damage cover structure (1041) based on physical flood event measurements, comprising a predefined data structure (1005) to capture a geographic and/or topographic area (2) to be covered, the data structure (1005) at least comprising definable area parameters (10051) capturing geographic location (100511) and/or geographic extent (100512) of said geographic and/or topographic area (2), wherein the optical-based system (1) comprises satellite-based and airplane-based aerial remote sensing devices (102/1023,1024) for measuring optical imaging sensory data (1021) and transmitting said optical imaging sensory data (1021) via a data transmission link (111) and network (11) to a central ground station (10), further defined:
in that the central ground station (10) comprises a flood map generator (100) for capturing the geographic and/or topographic area (2) by means of a measured flood map (1007) using the data structure (1005), the data structure (1005) further comprising measuring parameters related to measurands depending on the physical, location-dependent event strength, location, and measured time window, and for generating the flood map (1007) by the flood map generator (100) based on the transmitted optical imaging sensory data (1021) comprising at least measured elevation measurements based on transmitted drone sensory data and location data using the predefined data structure (1005), wherein the flood map is generated by the flood map generator (100) through multi-source measuring parameter (1021) processing based on measured satellite radar imagery at least augmented with measured flood data optical satellite imagery and aerial optical imagery and accounting for terrain and hydrology by water sheds measuring data and digital terrain modelling the flood map (1007) comprising peak flood extend and depth,
in that the central ground station (10) comprises a meshed network structure (1008) of network points (10081) generated with spaced network points (1008) over said geographic and/or topographic area (2) having a definable mesh size (10082) and covering the whole geographic and/or topographic area (2), wherein the network points (10081) are adjusted to geographic or topographic characteristics within the mesh network (1008) with an adjustable spacing (10083), and wherein after the occurrence of the flood event (4), the affected area (21) of said geographic and/or topographic area (2) is measured based on measuring a flooding at each network point (10081) of the meshed network (1008) within the affected area (21) based on the flood map (1007),
in that an occurrence of a flood event (4) is detected by using a loopback signaling (1022) for signaling of the satellite-based and airplane-based aerial remote sensing devices (102/1023,1024), and
in that the central ground station (10) comprises a measuring engine for aggregating, after an occurrence of a flood event (4), within an affected area (21) of said geographic and/or topographic area (2) the total number of network points (100813), wherein network points (10081) measured as flooded are contributing to the measured affected area (21) while network points (10082) measured as not flooded are contributing to the area (22) measured as not affected, and for measuring the flooding extent value (44) and/or flooding impact measure value (45) of the affected area (21) based on the network points (10081) measured as flooded (100811) to the total number of network points (100813) of the affected area (21).

14. An optical-based measuring and forecasting system (1) according to claim 13, wherein a parametric coverage (1031) is generated covering a loss associated with the occurrence of the flood event (4) and impacting the geographic area (2) measured by the affected area (21), as per the adjustable damage-cover structure (1041) a threshold measure (1032) is triggered by a threshold-trigger (103), wherein the threshold-trigger is selected from a percentage (23) of the affected area (21) to the geographic area (2), and wherein by an electronic payment transfer module, based on the generated parametric coverage (1031), monetary pay-out parameter values are transferred by electronic payment transfer to the flood-exposed physical object (3) and/or an individual associated with the flood-exposed physical object (3).

## Patentansprüche

1. Automatisiertes optikbasiertes Mess- und/oder Vorhersageverfahren zum Messen eines quantitativen Überschwemmungsausmaßes (44) und Überschwemmungsauswirkungsmesswerts (45) für physische Objekte (3), die sich innerhalb eines topographischen Gebiets (2) befinden, das von einem Auftreten eines Hochwasserereignisses (4) beeinträchtigt ist, das das Messen mittels satellitenbasierter und flugzeugbasierter luftgestützter Fernabtastvorrichtungen (102/1023/1024) eines optikbasierten Mess- und/oder Vorhersagesystems (1), optischer Bildgebungssensordaten (1021) und das Übertragen der optischen Bildgebungssensordaten (1021) über eine Datenübertragungsverbindung (111) an eine zentrale Bodenstation (10) umfasst, das Folgendes umfasst:
Aufnehmen eines geographischen und/oder topographischen Gebiets (2), das von einer vordefinierten Datenstruktur (1005) eines Hochwasserkartengenerators (100) gedeckt werden soll, wobei die Datenstruktur (1005) mindestens definierbare Gebietsparameter (10051) umfasst, die den geographischen Ort (100511) und das geographische Ausmaß (100523) des geographischen und/oder topographischen Gebiets (2) und Messparameter bezüglich Messgrößen aufnehmen, die von der physischen, ortsabhängigen Ereignisstärke, dem Ort und dem gemessenen Zeitfenster abhängen, und Erzeugen einer Hochwasserkarte (1007) durch den Hochwasserkartengenerator (100) basierend auf den übertragenen optischen Bildgebungssensordaten (1021), die mindestens gemessene Höhenmaße basierend auf übertragenen Drohnensensordaten und Ortsdaten unter Verwendung der vordefinierten Datenstruktur (1005) umfassen, wobei die Hochwasserkarte von dem Hochwasserkartengenerator (100) durch Verarbeiten von Multiquellen-Messparametern (1021) erzeugt werden, basierend auf gemessener Satellitenradarbildgebung, die mindestens durch gemessene Hochwasserdaten aus optischen Satellitenbildgebern und/oder luftgestützte optische Bildgebung ergänzt ist, und unter Berücksichtigung von Gelände und Hydrologie anhand von Wasserscheidenmessdaten, und digitales Modellieren der Hochwasserkarte (1007), die Spitzenhochwasserausdehnung und -tiefe umfasst,
Erzeugen beabstandeter Netzpunkte (10081) über das geographische und/oder topographische Gebiet (2), die ein vernetztes Netzwerk (1008) von Netzpunkten (10081) bereitstellen, die eine definierbare Maschengröße (10082) aufweisen und das gesamte geographische und/oder topographische Gebiet (2) decken, wobei ein Gitter (1002) aus Gitterzellen (1003) über dem gesamten geographischen und/oder topographischen Gebiet (2) von dem Maschennetz (1008) definiert ist, wobei jede Gitterzelle (1003) einen Netzpunkt (10081) als einen Schwerpunkt aufweist, wobei das geographische und/oder topographische Gebiet (2) vollständig von den Gitterzellen (1003) des Gitters (1002) bedeckt ist, wobei die Netzpunkte (10081) auf geographische oder topographische Merkmale innerhalb des Maschennetzes (1008) mit einer einstellbaren Beabstandung (10083) eingestellt sind, und wobei nach dem Auftreten des Hochwasserereignisses (4) das betroffene Gebiet (21) des geographischen und/oder topographischen Gebiets (2) basierend auf dem Messen einer Überschwemmung an jedem Netzpunkt (10081) des Maschennetzes (1008) innerhalb des betroffenen Gebiets (21) basierend auf der Hochwasserkarte (1007) gemessen wird,
Erfassen eines Auftretens eines Hochwasserereignisses (4) unter Verwendung einer Loopback-Signalisierung (1022) zum Signalisieren der satellitenbasierten und flugzeugbasierten luftgestützten Fernabtastvorrichtungen (102/1023, 1024),
Aggregieren nach einem gemessenen Auftreten eines Hochwasserereignisses (4/41, ..., 43) für ein betroffenes Gebiet (21) des geographischen und/oder topographischen Gebiets (2) der Gesamtanzahl von Netzpunkten innerhalb des betroffenen Gebiets (21), wobei Netzpunkte (10081), die als überschwemmt (100811) gemessen werden, zu dem gemessenen betroffenen Gebiet (21) beitragen, während Netzpunkte (10081), die nicht als überschwemmt (100812) gemessen werden, zu dem Gebiet (22) beitragen, das als nicht betroffen gemessen wird, und
Messen des Überschwemmungsausmaßwerts (44) und/oder des Überschwemmungsauswirkungsmesswerts (45) des betroffenen Gebiets (21) basierend auf den Netzpunkten (1008), die als überschwemmt (10081) gemessen werden, bezogen auf die Gesamtanzahl von Netzpunkten des geographischen und/oder topographischen Gebiets (2).

2. Automatisiertes Verfahren nach Anspruch 1, **dadurch gekennzeichnet, dass** es ferner eine dynamische parametrische Hochwasserauswirkungsdeckung (1031) für ein physisches Objekt (3/31) bereitstellt, das von dem Auftreten des Hochwasserereignisses (4) physisch beeinträchtigt wird, unter Verwendung einer adaptiven Schadensdeckungsstruktur (1041) basierend auf dem gemessenen Überschwemmungsausmaßwert (44) und/oder dem Überschwemmungsauswirkungsmesswert (45),
Erzeugen der parametrischen Deckung (1031), die einen möglichen Verlust deckt, der dem Auftreten des Überschwemmungsereignisses (4) zugeordnet ist, das sich auf den betroffenen Gebiet (2) auswirkt, gemessen durch das betroffene Gebiet (21), wobei gemäß der einstellbaren Schadensdeckungsstruktur (1041) ein Hochwasserschwellenmaß (1031) von einem elektronischen Schwellenwertauslöser (103) ausgelöst wird, wobei der Schwellenwertauslöser aus einem gemessenen Prozentwert (23) ausgewählt wird, der sich aus dem gemessenen beeinflussen Gebiet (21) bezogen auf das geographische Gebiet (2) oder den gemessenen betroffenen Netzpunkten (100811) bezogen auf die Gesamtanzahl von Netzpunkten (100813) ergibt; und
Transferieren durch ein elektronisches Zahlungstransfermodul, basierend auf der erzeugten Parameterdeckung (1031) von monetären Auszahlungsparameterwerten durch elektronischen Zahlungstransfer an ein beeinträchtigtes physisches Objekt (3/31) und/oder an eine einem beeinträchtigten physischen Objekt (3/31) zugeordnete risikoexponierte Person.

3. Verfahren nach einem der Ansprüche 1 oder 2, **dadurch gekennzeichnet, dass** die Netzpunkte (10081) als überschwemmt gemessen werden, wenn jeder Netzpunkt (10081) eines definierten Gebiets überschwemmt ist.

4. Verfahren nach einem der Ansprüche 1 bis 3, **dadurch gekennzeichnet, dass** die Netzpunkte (10081) regelmäßig innerhalb des Maschennetzes (1008) mit einer vordefinierbaren Beabstandung (10083) beabstandet sind.

5. Verfahren nach Anspruch 4, **dadurch gekennzeichnet, dass** die Netzpunkte (10081) im Wesentlichen 0,005 x 0,005 Grad Maschennetzpunkte (10081) betragen.

6. Verfahren nach einem der Ansprüche 4 oder 5, **dadurch gekennzeichnet, dass** die Netzpunkte (10081) die Eckpunkte von zweidimensionalen m x n-Blöcken darstellen.

7. Verfahren nach Anspruch 6, **dadurch gekennzeichnet, dass** die m x n-Blöcke in etwa 8,72*10-5 Radian betragen.

8. Verfahren nach einem der Ansprüche 1 bis 7, **dadurch gekennzeichnet, dass** das topographische Gebiet (2) nicht variierende Landschaft umfasst, die für das Gebiet repräsentativ ist, das von trockenem Land (24) und Feuchtgebiet (25) bedeckt ist.

9. Verfahren nach einem der Ansprüche 1 bis 8, **dadurch gekennzeichnet, dass** das Auftreten des Hochwasserereignisses (4) unter Verwendung von Loopback-Signalisierung (1022) erfasst wird.

10. Verfahren nach einem der Ansprüche 1 bis 9, **dadurch gekennzeichnet, dass** die Maschennetzpunkte (10081), die als überschwemmt (100811) gemessen werden, unter Verwendung mindestens eines Machine-Learning-Ansatzes bestimmt werden.

11. Verfahren nach einem der Ansprüche 1 bis 10, **dadurch gekennzeichnet, dass** das betroffene Gebiet (21) unter Verwendung von On-Air-Bildgebungsvorrichtungen gemessen wird.

12. Verfahren nach einem der Ansprüche 1 bis 11, **dadurch gekennzeichnet, dass** ein Schritt des Erzeugens eines Prämienwerts basierend auf der Auszahlungsdeckung (1031), die einer Messung zugeordnet ist, durchgeführt wird.

13. Optikbasiertes Mess- und Vorhersagesystem (1) zum Bereitstellen einer dynamischen parametrischen Deckung (1031) im Falle eines gemessenen Auftretens eines Hochwasserereignisses (2) unter Verwendung einer adaptiven Schadensdeckungsstruktur (1041) basierend auf physischen Hochwasserereignismessungen, das eine vordefinierte Datenstruktur (1005) zum Aufnehmen eines zu deckenden geographischen und/oder topographischen Gebiets (2) umfasst, wobei die Datenstruktur (1005) mindestens definierbare Gebietsparameter (10051) umfasst, die den geographischen Ort (100511) und/oder das geographisches Ausmaß (100512) des geographischen und/oder topographischen Gebiets (2) aufnehmen, wobei das optikbasierte System (1) satellitenbasierte und flugzeugbasierte luftgestützte Fernabtastvorrichtungen (102/1023, 1024) zum Messen optischer Bildgebungsabtastdaten (1021) und Übertragen der optischen Bildgebungsabtastdaten (1021) über eine Datenübertragungsverbindung (111) und ein Netzwerk (11) an eine zentrale Bodenstation (10) umfasst, weiter definiert dadurch:
dass die zentrale Bodenstation (10) einen Hochwasserkartengenerator (100) zum Aufnehmen des geographischen und/oder topographischen Gebiets (2) mittels einer gemessenen Hochwasserkarte (1007) umfasst, die die Datenstruktur (1005) verwendet, wobei die Datenstruktur (1005) ferner Messparameter bezüglich Messgrößen umfasst, die von der physischen, ortsabhängigen Ereignisstärke, dem Ort und dem gemessenen Zeitfenster abhängen, und zum Erzeugen der Hochwasserkarte (1007) durch den Hochwasserkartengenerator (100) basierend auf den übertragenen optischen Bildgebungssensordaten (1021), die mindestens gemessene Höhenmaße basierend auf übertragenen Drohnensensordaten und Ortsdaten unter Verwendung der vordefinierten Datenstruktur (1005) umfassen, wobei die Hochwasserkarte von dem Hochwasserkartengenerator (100) durch Multiquellen-Messparameter (1021) erzeugt wird, basierend auf gemessener Satellitenradarbildgebung, die mindestens durch gemessene Hochwasserdaten aus optischen Satellitenbildgebern und/oder flugzeugbasierten optischen Bilddaten ergänzt sind, unter Berücksichtigung von Gelände und Hydrologie anhand von Wasserscheidenmessdaten und digitaler Geländemodellierung verarbeiten, wobei die Hochwasserkarte (1007) die Spitzenhochwasserausdehnung und -tiefe modelliert,
dass die zentrale Bodenstation (10) eine Maschennetzstruktur (1008) von Netzpunkten (10081) umfasst, die mit beabstandeten Netzpunkten (1008) über das geographische und/oder topographische Gebiet (2) erzeugt werden, die eine definierbare Maschengröße (10082) aufweisen und das gesamte geographische und/oder topographische Gebiet (2) decken, wobei die Netzpunkte (10081) auf geographische oder topographische Merkmale innerhalb des Maschennetzes (1008) mit einer einstellbaren Beabstandung (10083) eingestellt werden, und wobei nach dem Auftreten des Hochwasserereignisses (4) das betroffene Gebiet (21) des geographischen und/oder topographischen Gebiets (2) basierend auf Messen einer Überschwemmung an jedem Netzpunkt (10081) des Maschennetzes (1008) innerhalb des betroffenen Gebiets (21) basierend auf der Hochwasserkarte (1007) gemessen wird,
dass ein Auftreten eines Hochwasserereignisses (4) durch Verwendung einer Loopback-Signalisierung (1022) zum Signalisieren der satellitenbasierten und flugzeugbasierten luftgestützten Fernabtastvorrichtungen (102/1023, 1024) erfasst wird, und
dass die zentrale Bodenstation (10) eine Mess-Engine zum Aggregieren, nach einem Auftreten eines Hochwasserereignisses (4), innerhalb eines betroffenen Gebiets (21) des geographischen und/oder topographischen Gebiets (2) der Gesamtanzahl von Netzpunkten (100813) umfasst, wobei Netzpunkte (10081), die als überschwemmt gemessen werden, zu dem gemessenen betroffenen Gebiet (21) beitragen, während Netzpunkte (10082), die als nicht überschwemmt gemessen werden, zu dem Gebiet (22) beitragen, das als nicht betroffen gemessen wird, und zum Messen des Überschwemmungsausmaßwerts (44) und/oder des Überschwemmungsauswirkungsmesswerts (45) des betroffenen Gebiets (21) basierend auf den Netzpunkten (10081), die als überschwemmt (100811) gemessen werden, bezogen auf die Gesamtanzahl der Netzpunkte (100813) des betroffenen Gebiets (21) beitragen.

14. Optikbasiertes Mess- und Vorhersagesystem (1) nach Anspruch 13, wobei eine parametrische Deckung (1031) erzeugt wird, die einen Verlust deckt, der dem Auftreten des Hochwasserereignisses (4) zugeordnet ist und das geographische Gebiet (2) beeinträchtigt, gemessen durch das betroffene Gebiet (21) gemäß der einstellbaren Schadensdeckungsstruktur (1041) ein Schwellenwertmaß (1032) von einem Schwellenwertauslöser (103) ausgelöst wird, wobei der Schwellenwertauslöser aus einem Prozentsatz (23) des betroffenen Gebiets (21) bezogen auf das geographische Gebiet (2) ausgewählt wird, und wobei durch ein elektronisches Zahlungstransfermodul basierend auf der erzeugten parametrischen Deckung (1031) monetäre Auszahlungsparameterwerte durch den elektronischen Zahlungstransfer an das hochwasserexponierte physische Objekt (3) und/oder eine Person, die dem hochwasserexponierten physischen Objekt (3) zugeordnet ist, transferiert werden.

## Revendications

1. Procédé de mesure et/ou de prévision optique pour mesurer une étendue d'inondation quantitative (44) et une mesure d'impact d'inondation (45) pour des objets physiques (3) situés dans une zone topographique (2) impactée par une survenue d'un évènement d'inondation (4), comprenant la mesure, au moyen de dispositifs de télédétection aérienne satellitaires et aéroportés (102/1023/1024), de données sensorielles d'imagerie optique (1021) issues d'un système de mesure et/ou de prévision optique (1) et la transmission desdites données sensorielles d'imagerie optique (1021) via une liaison de transmission de données (111) vers une station centrale au sol (10), comprenant :
la capture d'une zone géographique et/ou topographique (2) à couvrir par une structure de données prédéfinie (1005) d'un générateur de carte d'inondation (100), la structure de données (1005) comprenant au moins des paramètres de zone définissables (10051) capturant la localisation géographique (100511) et l'étendue géographique (100523) de ladite zone géographique et/ou topographique (2) et des paramètres de mesure liés aux mesurandes dépendant de l'intensité, de la localisation et de la fenêtre temporelle mesurée de l'événement physique dépendant de la localisation, et générant une carte d'inondation (1007) par le générateur de carte d'inondation (100) sur la base des données sensorielles d'imagerie optique transmises (1021) comprenant au moins des mesures d'altitude mesurées basées sur les données sensorielles de drone transmises et des données de localisation utilisant la structure de données prédéfinie (1005), dans lequel la carte d'inondation est générée par le générateur de cartes d'inondation (100) par traitement de paramètres de mesure multi-sources (1021) basé sur une imagerie radar satellitaire mesurée au moins augmentée d'imagerie optique satellitaire et d'imagerie optique aérienne de données d'inondation mesurées et tenant compte du terrain et de l'hydrologie par mesure de données de bassins versants et modélisation numérique du terrain, la carte d'inondation (1007) comprenant l'étendue et la profondeur d'inondation maximale,
la génération de points de réseau espacés (10081) sur ladite zone géographique et/ou topographique (2) fournissant un réseau maillé (1008) de points de réseau (10081) ayant une taille de maille définissable (10082) et couvrant l'ensemble de la zone géographique et/ou topographique (2), dans lequel une grille (1002) de cellules de grilles (1003) couvrant la zone géographique et/ou topographique (2) est définie par le réseau maillé (1008), chaque cellule de grille (1003) ayant pour centroïde un point du réseau (10081), dans lequel la zone géographique et/ou topographique (2) est entièrement couverte par les cellules de grilles (1003) de la grille (1002), dans lequel les points de réseau (10081) sont ajustés aux caractéristiques géographiques ou topographiques à l'intérieur du réseau maillé (1008) avec un espacement ajustable (10083) et dans lequel après la survenue de l'évènement d'inondation (4), la zone touchée (21) de ladite zone géographique et/ou topographique (2) est mesurée sur la base de la mesure d'une inondation à chaque point de réseau (10081) du réseau maillé (1008) dans la zone touchée (21) sur la base de la carte d'inondation (1007),
la détection d'une survenue d'un évènement d'inondation (4) à l'aide d'une boucle de rétroaction (1022) pour la signalisation des dispositifs de télédétection aérienne satellitaire et aéroportée (102/1023, 1024),
l'agrégation, après une survenue mesurée d'un évènement d'inondation (4/41, ..., 43), pour une zone touchée (21) de ladite zone géographique et/ou topographique (2), du nombre total de points de réseau à l'intérieur de la zone touchée (21), dans lequel les points de réseau (10081) mesurés comme inondés (100811) contribuent à la surface touchée mesurée (21), tandis que les points de réseau (10081) mesurés comme non inondés (100812) contribuent à la surface (22) mesurée comme non touchée et
la mesure de la valeur d'étendue d'inondation (44) et/ou de la valeur d'impact d'inondation (45) de la zone touchée (21) sur la base du nombre de points de réseau (1008) mesurés comme inondés (10081) par rapport au nombre total de points de réseau de la zone géographique et/ou topographique (2).

2. Procédé automatisé selon la revendication 1, **caractérisé en ce qu'**il fournit en outre une couverture paramétrique dynamique d'impact d'inondation (1031) pour un objet physique (3/31) physiquement impacté par la survenue d'une inondation (4), au moyen d'une structure de couverture des dommages adaptative (1041) basée sur la valeur d'étendue d'inondation mesurée (44) et/ou la valeur de mesure d'impact d'inondation (45),
la génération de la couverture paramétrique (1031) couvrant une perte potentielle associée à la survenue de l'évènement d'inondation (4) impactant la zone géographique (2) mesurée par la zone touchée (21), conformément à la structure de couverture des dommages ajustable (1041) une mesure de seuil d'inondation (1031) est déclenchée par un déclencheur de seuil électronique (103), dans lequel le déclencheur de seuil électronique est sélectionné à partir d'une valeur de pourcentage mesurée (23) donnée par la zone touchée mesurée (21) par rapport à la zone géographique (2) ou par les points de réseau touchés mesurés (100811) par rapport au nombre total de points de réseau (100813) ; et
le transfert, par un module de virement électronique, sur la base de la couverture paramétrique générée (1031) de valeurs de paramètre de versement monétaire par virement électronique vers un objet physique impacté (3/31) et/ou une personne exposée au risque associé à un objet physique impacté (3/31).

3. Procédé selon une des revendications 1 ou 2, **caractérisé en ce que** les points de réseau (10081) sont mesurés comme inondés lorsque chaque point de réseau (10081) d'une zone définie est inondé.

4. Procédé selon une des revendications 1 à 3, **caractérisé en ce que** les points de réseau (10081) sont régulièrement espacés au sein du réseau maillé (1008) avec un espacement prédéfini (10083).

5. Procédé selon la revendication 4, **caractérisé en ce que** les points de réseau (10081) sont essentiellement des points de réseau maillé de 0,005 x 0,005 degré (10081).

6. Procédé selon une des revendications 4 ou 5, **caractérisé en ce que** les points de réseau (10081) représentent les coins de blocs bidimensionnels de dimensions m × n.

7. Procédé selon la revendication 6, **caractérisé en ce que** les blocs de dimensions m × n ont un rayon d'environ 8,72 * 10-5 radians.

8. Procédé selon une des revendications 1 à 7, **caractérisé en ce que** la zone topographique (2) comprend un paysage uniforme représentatif des zones couvertes de terres sèches (24) et de zones humides (25).

9. Procédé selon une des revendications 1 à 8, **caractérisé en ce que** la survenue de l'événement d'inondation (4) est détectée à l'aide d'une signalisation en boucle (1022).

10. Procédé selon une des revendications 1 à 9, **caractérisé en ce que** les points de réseau maillé (10081) mesurés comme inondés (100811) sont déterminés au moyen d'au moins une approche d'apprentissage automatique.

11. Procédé selon une des revendications 1 à 10, **caractérisé en ce que** la zone touchée (21) est mesurée à l'aide de dispositifs d'imagerie en temps réel.

12. Procédé selon une des revendications 1 à 11, **caractérisé en ce qu'**une étape de génération d'une valeur de prime est basée sur la couverture de versement (1031) associée à une mesure.

13. Système de mesure et de prévision optique (1), pour fournir une couverture paramétrique dynamique (1031) en cas d'une survenue mesurée d'un évènement d'inondation (2) à l'aide d'une structure de couverture des dommages adaptative (1041) basée sur des mesures d'évènement d'inondation physique, comprenant une structure de données prédéfinie (1005) pour capturer une zone géographique et/ou topographique (2) à couvrir, la structure de données (1005) comprenant au moins des paramètres de zones définissables (10051) capturant la localisation géographique (100511) et l'étendue géographique (100512) de ladite zone géographique et/ou topographique (2), dans lequel le système optique (1) comprend des dispositifs de télédétection aérienne satellitaires et aéroportés (102/1023, 1024) pour mesurer des données sensorielles d'imagerie optique (1021) et transmettre lesdites données sensorielles d'imagerie optique (1021) via une liaison de transmission de données (111) et réseau (11) vers une station centrale au sol (10), définie en outre
en ce que la station centrale au sol (10) comprend un générateur de carte d'inondation (100) pour capturer une zone géographique et/ou topographique (2) au moyen d'une carte d'inondation mesurée (1007) à l'aide de la structure de données (1005), la structure de données (1005) comprenant en outre des paramètres de mesure liés aux mesurandes dépendant de l'intensité, de la localisation et de la fenêtre temporelle mesurée de l'événement physique dépendant de la localisation, et pour générer une carte d'inondation (1007) par le générateur de carte d'inondation (100) sur la base des données sensorielles d'imagerie optique transmises (1021) comprenant au moins des mesures d'altitude mesurées basées sur les données sensorielles de drone transmises et des données de localisation utilisant la structure de données prédéfinie (1005), dans lequel la carte d'inondation est générée par le générateur de cartes d'inondation (100) par traitement de paramètres de mesure multi-sources (1021) basé sur une imagerie radar satellitaire mesurée au moins augmentée d'imagerie optique satellitaire et d'imagerie optique aérienne de données d'inondation mesurées et tenant compte du terrain et de l'hydrologie par mesure de données de bassins versants et modélisation numérique du terrain, la carte d'inondation (1007) comprenant l'étendue et la profondeur d'inondation maximale,
en ce que la station centrale au sol (10) comprend une structure de réseau maillé (1008) de points de réseau (10081) générés avec des points de réseau espacés (1008) sur ladite zone géographique et/ou topographique (2) ayant une taille de maille définissable (10082) et couvrant l'ensemble de la zone géographique et/ou topographique (2), dans lequel les points de réseau (10081) sont ajustés aux caractéristiques géographiques ou topographiques à l'intérieur du réseau maillé (1008) avec un espacement ajustable (10083) et dans lequel après la survenue de l'évènement d'inondation (4), la zone touchée (21) de ladite zone géographique et/ou topographique (2) est mesurée sur la base de la mesure d'une inondation à chaque point de réseau (10081) du réseau maillé (1008) dans la zone touchée (21) sur la base de la carte d'inondation (1007),
en ce qu'une survenue d'un évènement d'inondation (4) est détectée à l'aide d'une boucle de rétroaction (1022) pour la signalisation des dispositifs de télédétection aérienne satellitaire et aéroportée (102/1023, 1024), et
en ce que la station centrale au sol (10) comprend un moteur de mesure pour l'agrégation, après une survenue d'un évènement d'inondation (4), à l'intérieur d'une zone touchée (21) de ladite zone géographique et/ou topographique (2), du nombre total de points de réseau (100813), dans lequel les points de réseau (10081) mesurés comme inondés contribuent à la surface touchée mesurée (21), tandis que les points de réseau (10082) mesurés comme non inondés contribuent à la surface (22) mesurée comme non touchée et pour la mesure de la valeur d'étendue d'inondation (44) et/ou de la valeur d'impact d'inondation (45) de la zone touchée (21) sur la base du nombre de points de réseau (10081) mesurés comme inondés (100811) par rapport au nombre total de points de réseau (100813) de la zone touchée (21).

14. Système de mesure et de prévision optique (1) selon la revendication 13, dans lequel une couverture paramétrique (1031) est générée, couvrant une perte associée à la survenue de l'évènement d'inondation (4) et impactant la zone géographique (2) mesurée par la zone touchée (21), conformément à la structure de couverture des dommages ajustable (1041) une mesure de seuil (1032) est déclenchée par un déclencheur de seuil (103), dans lequel le déclencheur de seuil est sélectionné à partir d'une valeur de pourcentage mesurée (23) donnée par la zone touchée (21) par rapport à la zone géographique (2) et dans lequel par un module de virement électronique basé sur la couverture paramétrique générée (1031), des valeurs de paramètre de versement monétaire sont transférées par virement électronique vers un objet physique exposé à l'inondation (3) et/ou une personne associée à l'objet physique exposé à l'inondation (3).
